(19) Europäisches Patentamt
European Patent Office
Office européen des brevets

(11) **EP 3 704 553 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **18793665.3**

(22) Anmeldetag: **26.10.2018**

(51) Internationale Patentklassifikation (IPC):
**G05B 19/4093** (2006.01)    **B23Q 17/24** (2006.01)
**G01B 21/00** (2006.01)    **B23Q 9/00** (2006.01)

(52) Gemeinsame Patentklassifikation (CPC):
**G05B 19/40938; B23Q 9/0014; B23Q 17/2414; G01B 21/00;** G05B 2219/32001; G05B 2219/36451; G05B 2219/39573

(86) Internationale Anmeldenummer:
**PCT/EP2018/079491**

(87) Internationale Veröffentlichungsnummer:
**WO 2019/086353 (09.05.2019 Gazette 2019/19)**

(54) **SYSTEM ZUR BEARBEITUNG EINES WERKSTÜCKS**

METHOD FOR MACHINING A WORKPIECE

SYSTÈME DESTINÉ À L'USINAGE D'UNE PIÈCE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **02.11.2017   DE 102017125665**
**10.11.2017   DE 102017126487**

(43) Veröffentlichungstag der Anmeldung:
**09.09.2020   Patentblatt 2020/37**

(73) Patentinhaber: **Festool GmbH**
**73240 Wendlingen (DE)**

(72) Erfinder:
• **RUSCH, Marc**
**73728 Esslingen (DE)**
• **KÜBELER, Matthias**
**73760 Ostfildern (DE)**

(74) Vertreter: **Patentanwälte Bregenzer und Reule Partnerschaftsgesellschaft mbB**
**Neckarstraße 47**
**73728 Esslingen (DE)**

(56) Entgegenhaltungen:
EP-A1- 1 588 806    WO-A1-2016/183390

**Beschreibung**

Die Erfindung betrifft ein System zur Bearbeitung eines Werkstücks gemäß dem Oberbegriff des Anspruchs 1.

Ein derartiges System geht z.B. aus WO 2016/183390 A1 hervor

Ein System, bei dem die Markierungserfassungseinrichtung einen Bestandteil der Hand-Werkzeugmaschine bildet, ist beispielsweise in US2015/0094836 A1 erläutert.

Der Benutzer kann beispielsweise an einem Display der Hand-Werkzeugmaschine erkennen, wo sich die mindestens eine Werkstückmarkierung befindet und sozusagen dadurch den Startpunkt für die anschließende Werkstückbearbeitung, in diesem Fall eine Fräsbearbeitung, setzen. Der Bediener führt die Hand-Werkzeugmaschine entlang einer Arbeitslinie, die am Display der Hand-Werkzeugmaschine angezeigt wird, an dem Werkstück entlang. Die Hand-Werkzeugmaschine selbst wiederum hat eine Nachführ-Stellmotorik, so dass das Arbeitswerkzeug der sozusagen gedachten Arbeitslinie folgt.

Allerdings ist die Präzision eines derartigen Systems in manchen Fällen nicht ausreichend.

Es ist daher die Aufgabe der vorliegenden Erfindung, ein verbessertes System zur Bearbeitung eines Werkstücks bereitzustellen.

Zur Lösung der Aufgabe ist ein System gemäß der technischen Lehre des Anspruchs 1 vorgesehen.

Zur Lösung der Aufgabe ist ferner ein Verfahren zur Bearbeitung eines Werkstücks gemäß Anspruch 15 vorgesehen.

Es ist ein Grundgedanke der vorliegenden Erfindung, dass die mechanische oder optische Referenz sozusagen direkt auf und unmittelbar neben der mindestens einen Werkstückmarkierung positioniert wird, so dass auf diesem Wege eine exakte räumliche oder örtliche Koinzidenz zwischen einerseits der mechanischen / optischen Referenz und andererseits der Werkstückmarkierung erzielbar ist. Eine mögliche Ungenauigkeit dahingehend, dass ein optisches System verwendet wird, welches die Werkstückmarkierung sozusagen abbildet, so dass der Benutzer eine virtuelle Referenz auf die abgebildete Werkstückmarkierung setzt, ist somit anders als im Stand der Technik nicht vorhanden. Die mechanische oder optische Referenz ist relativ zu der Werkstückmarkierung verstellbar und/oder mobil.

Die Werkstückmarkierung kann eine Markierung sein, die ein Bediener auf dem Werkstück anbringt, beispielsweise eine linienförmige Markierung, eine Strichmarkierung, ein Markierungspunkt oder dergleichen. Die Werkstückmarkierung kann aber auch eine sozusagen natürliche Werkstückmarkierung oder eine Werkstückmarkierung sein, die einen integralen Bestandteil des Werkstücks bildet, beispielsweise eine Werkstückkante, eine Ausnehmung, eine farbige Markierung oder Kontrastmarkierung in einer Oberflächenbeschichtung des Werkstücks oder dergleichen.

Das Koordinatensystem kann zweidimensional oder auch dreidimensional sein. Mithin ist das Koordinatensystem vorzugsweise räumlich.

Das Koordinatensystem ist beispielsweise bezüglich des Arbeitsraumes ortsfest.

Ein bevorzugtes Ausführungsbeispiel sieht vor, dass die Hand-Werkzeugmaschine und/oder die Markierungserfassungseinrichtung und/oder eine später noch erläuterte Werkstückpositionserfassungseinrichtung ein lokales Koordinatensystem, insbesondere ein lokales zweidimensionales oder dreidimensionales Koordinatensystem aufweist. Mindestens eine der vorgenannten Komponenten ist dazu ausgestaltet, in einem lokalen Koordinatensystem ermittelte Koordinatendaten eines geometrischen Objekts, beispielsweise eines Punktes, einer Linie oder einer Fläche, in ein anderes Koordinatensystem umzuwandeln. Dazu sind beispielsweise die nachfolgend eingeblendeten Formeln (1), (2) und (3) für eine Rotationstransformation geeignet.

$$Rx(\alpha) = \begin{pmatrix} 1 & 0 & 0 \\ 0 & \cos\alpha & -\sin\alpha \\ 0 & \sin\alpha & \cos\alpha \end{pmatrix} \qquad (1)$$

$$Ry(\beta) = \begin{pmatrix} \cos\beta & 0 & \sin\beta \\ 0 & 1 & 0 \\ -\sin\beta & 0 & \cos\beta \end{pmatrix} \qquad (2)$$

$$Rz(\gamma) = \begin{pmatrix} \cos\gamma & -\sin\gamma & 0 \\ \sin\gamma & \cos\gamma & 0 \\ 0 & 0 & 1 \end{pmatrix} \qquad (3)$$

So kann beispielsweise anhand der Formal (1) eine Rotation um die X-Achse um einen Winkel $\alpha$, mit der Formal (2) eine Rotation mit dem Winkel $\beta$ um die Y-Achse sowie mit der Formel (3) eine Rotation mit dem Winkel $\gamma$ um die Z-Achse beschrieben werden. Selbstverständlich sind auch translatorische Transformationen möglich, wozu übliche Matrix-Verschiebungen bekanntermaßen geeignet sind.

Ein alternatives Konzept zur Berechnung einer Verschiebeoperation bzw. Translation von Punkten aus einem Koordinatensystem in ein anderes Koordinatensystem, beispielsweise von einem lokalen Koordinatensystem der Markierungserfassungseinrichtung oder der Hand-Werkzeugmaschine auf das globale, auf den Arbeitsraum bezogene Koordinatensystem sind sogenannte Quaternionen. Über beispielsweise Skalarmultiplikationen der Quaternionen können die Koordinatensysteme sozusagen ineinander umgerechnet werden.

Die Umrechnung oder den Transfer der Koordinatensysteme können die jeweiligen Steuerungseinrichtungen oder Überwachungseinrichtungen der Markierungserfassungseinrichtung, der Hand-Werkzeugmaschine, insbesondere der Führungsmittel, oder auch eine Werkstückerfassungseinrichtung, welche beispielsweise am Werkstück befestigbar ist, leisten.

Mindestens eine Komponente, die von der Hand-Werkzeugmaschine, z.B. deren Steuerungseinrichtung, und/oder von der Markierungserfassungseinrichtung und/oder von einer an dem Werkstück positionierten oder positionierbaren Werkstückpositionserfassungseinrichtung gebildet ist, ist vorteilhaft zu einer Translation und/oder Umrechnung von Koordinatendaten mindestens eines Punktes aus einem auf die jeweilige Komponente bezogenen lokalen, insbesondere zweidimensionalen oder dreidimensionalen, Koordinatensystem in das zumindest zweidimensionale, insbesondere bezüglich des Arbeitsraums ortsfeste, Koordinatensystem und/oder umgekehrt ausgestaltet.

Das Koordinatensystem kann unmittelbar an dem Werkstück angeordnet sein, beispielsweise durch einen Markierungsstreifen mit einem geometrischen Muster gebildet sein.

Erfindungsgemäß ist eine Bereitstellung des zumindest zweidimensionalen, vorzugsweise dreidimensionalen, Koordinatensystems anhand mindestens einem, in einem Arbeitsraum, in welchem das Werkstück angeordnet ist, platzierbaren Koordinatengeber vorgesehen. Die Führungsmittel und/oder die Markierungserfassungseinrichtung sind zur Ermittlung der Position des mindestens einen Koordinatengebers und/oder zur Ermittlung mindestens einer durch den mindestens einen Koordinatengeber gesendeten Referenzinformation ausgestaltet. Der Koordinatengeber kann also sozusagen ortsfest an einer vorbestimmten Position im Arbeitsraum und/oder am Werkstück angeordnet sein, welche dann von der Markierungserfassungseinrichtung und vorzugsweise später auch durch die Führungsmittel, wenn das Werkstück bearbeitet wird, erfasst wird.

Der mindestens eine Koordinatengeber kann ein sozusagen passiver Koordinatengeber sein, dessen räumliche Position von der Markierungserfassungseinrichtung und/oder dem Führungsmittel erfassbar ist. Beispielsweise erfasst die Markierung Erfassungseinrichtung oder das Führungsmittel eine geometrische Kontur und/oder eine Farbe und/oder einen Kontrast, beispielsweise einen Strichcode, an dem mindestens einen Koordinatengeber.

Der Koordinatengeber kann aber auch ein aktiver Koordinatengeber sein, der Referenzinformationen sendet. Die Referenzinformationen sind beispielsweise optische Informationen, beispielsweise Lichtimpulse, Lichtwellen oder dergleichen. Insbesondere sind physikalische Wellen, Mikrowellen oder dergleichen vorzugsweise als Referenzinformationen vorgesehen.

Der mindestens eine Koordinatengeber kann Befestigungsmittel, beispielsweise Haft-Befestigungsmittel, Haken-Befestigungsmittel und/oder Saugbefestigungsmittel, zur Befestigung an dem Werkstück oder einem Untergrund oder beiden aufweisen. Somit kann der Koordinatengeber sozusagen ortsfest festgelegt werden. Weiterhin ist es vorteilhaft, wenn der Koordinatengeber mindestens eine Stellfläche zum Abstellen auf einem Untergrund oder dem Werkstück oder beidem aufweist. Bevorzugt ist ein System mit mehreren, beispielsweise zwei, Koordinatengebern. Dadurch ist eine besonders günstige geometrische Konfiguration möglich. Die verschiedenen Koordinatengeber können in Abständen zueinander angeordnet werden, so dass die Führungsmittel oder die Markierungserfassungseinrichtung oder beide sozusagen stets mindestens einen Koordinatengeber in ihrem Erfassungsbereich vorfinden. Weiterhin können mit mehreren Koordinatengebern auch geometrische Verfahren zur Bestimmung des zweidimensionalen oder dreidimensionalen Koordinatensystems, beispielsweise Triangulation oder dergleichen, Anwendung finden.

Der mindestens eine Koordinatengeber ist zweckmäßigerweise zu einem Senden von Referenzinformationen in zueinander winkeligen Richtungen und/oder in zueinander parallelen Ebenen ausgestaltet. Die Markierungserfassungseinrichtung oder die Führungsmittel sind zu einem Erfassen dieser Referenzinformation ausgestaltet. Somit kann also die Markierungserfassungseinrichtung die Referenzinformationen optimal nutzen. Die zueinander winkeligen Richtungen sind vorzugsweise zueinander rechtwinkelig. So kann beispielsweise der Koordinatengeber in zueinander parallelen Ebenen in einer ersten Richtung und in einer zu der ersten Richtung winkeligen Richtung senden. Beispielsweise kann eine Art Streifenstruktur versendet werden. Die Streifenmuster können zueinander winkelig versendet werden, sodass im Prinzip eine Gitterstruktur vom Koordinatengeber vorgegeben wird, wobei die einzelnen Gitterlinien gleichzeitig oder nacheinander gesendet werden können.

Es kann beispielsweise vorgesehen sein, dass die Führungsmittel der Hand-Werkzeugmaschine oder die Markierungserfassungseinrichtung oder beide ein Orientierungsmittel zur Orientierung bezüglich des zumindest zweidimensionalen Koordinatensystems in einem Arbeitsraum, in welchem das Werkstück angeordnet ist, aufweisen. Das Orientierungsmittel ist zur Erfassung geometrischer Konturen des Arbeitsraums, beispielsweise Wänden, Raumecken, Rauminnenkanten oder dergleichen, ausgestaltet. Weiterhin ist es vorteilhaft, wenn das Orientierungsmittel zum Empfang von Referenzinformationen, wie die Lage der Hand-Werkzeugmaschine oder der Markierungserfassungseinrichtung oder des Werkstücks in dem Arbeitsraum charakterisieren, ausgestaltet ist. So kann beispielsweise das Orientierungsmittel dazu dienen, die oben genannten Referenzinformationen zu erfassen.

Die Markierungserfassungseinrichtung ist vorzugsweise zur Erfassung der Koordinatendaten der mindestens einen Werkstückmarkierung nach erfolgter Positionierung der Referenz bezüglich der Werkstückmarkierung in Abhängigkeit von mindestens einer Auslösebedingung ausgestaltet. Mithin kann also der Bediener beispielsweise die optische oder mechanische Referenz zunächst bezüglich der, beispielsweise an der, mindestens einen Werkstückmarkierung oder den jeweiligen Werkstückmarkierungen positionieren. Die Markierungserfassungseinrichtung erfasst dann die Koordinatendaten der mindestens einen Werkstückmarkierung in Abhängigkeit von mindestens einer Auslösebedingung.

Als Auslösebedingung kommen verschiedene Möglichkeiten in Frage, auch in Kombination miteinander. Nachfolgend beispielhaft einige Möglichkeiten:
So kann beispielsweise ein Sensor an der Markierungserfassungseinrichtung und/oder den Führungsmitteln vorgesehen sein, die eine Bedienhandlung eines Bedieners, beispielsweise eine Wisch-Bewegung, einen Druck oder dergleichen, erfassen kann. Der Sensor kann beispielsweise ein optischer Sensor sein, ein kapazitiver Sensor, ein induktiver Sensor oder dergleichen. Es ist auch möglich, dass die Bedienhandlung durch einen elektrischen Schalter, der an der Markierungserfassungseinrichtung oder dem Führungsmittel oder der Hand-Werkzeugmaschine vorgesehen ist, durch die Markierungserfassungseinrichtung oder die Führungsmittel erfasst wird.

Weiterhin ist eine zeitliche Bedingung, beispielsweise ein Verweilen der Referenz der mindestens einen Werkstückmarkierung für eine vorbestimmte Zeit, möglich. Die zeitliche Bedingung kann beispielsweise heißen, dass die Markierungserfassungseinrichtung relativ zu der Werkstückmarkierung für eine vorbestimmte Zeit nicht bewegt wird. Eine Relativbewegung oder auch eine nicht vorhandene Relativbewegung kann durch die Markierungserfassungseinrichtung beispielsweise anhand einer Abstandsmessung oder einer optischen Erfassung der Werkstückmarkierung für eine vorbestimmte Zeit ermittelt werden, aber auch anhand des nachfolgend erläuterten Bewegungssensors.

Es ist möglich, dass die Markierungserfassungseinrichtung einen Bewegungssensor aufweist. Wenn für eine vorbestimmte Zeit keine Bewegung der Markierungserfassungseinrichtung erfolgt, gilt dies als eine Erfassung der Werkstückmarkierung.

Ferner können die Markierungserfassungseinrichtung und/oder das Führungsmittel einen Abstandssensor umfassen oder aufweisen, mit dem eine Abstandserfassung eines Abstands zwischen der Referenz und der mindestens einen Werkstückmarkierung möglich ist. Wenn ein vorbestimmter Grenzabstand zwischen der Referenz und der mindestens einen Werkstückmarkierung unterschritten ist, also ein Grenzabstand eingehalten wird, gilt die Werkstückmarkierung als erfasst.

Ferner ist auch eine dynamische Erfassung der Werkstückmarkierung möglich. So kann beispielsweise die Markierungserfassungseinrichtung über die Werkstückmarkierung hinweg bewegt werden und diese optisch erfassen. Die optische Erfassung umfasst beispielsweise einen Hell-Dunkel-Kontrast zwischen der Werkstückmarkierung und einem Untergrund bzw. einer Oberfläche des Werkstücks.

Des Weiteren ist es vorteilhaft, wenn die Markierungserfassungseinrichtung zur taktischen und/oder optischen Anwahl der mindestens einen Werkstückmarkierung ausgestaltet ist. So kann die Markierungserfassungseinrichtung beispielsweise eine mechanische Referenz in Gestalt einer Pfeilmarkierung, einer Linienmarkierung oder dergleichen aufweisen. Die mechanische Referenz kann auch beispielsweise durch eine Seitenkante des Führungselements, beispielsweise eines Führungsschlittens oder Führungstischs, der Hand-Werkzeugmaschine bereitgestellt werden. In Bezug auf die optische Anwahl ist beispielsweise ein gerichteter Lichtstrahl möglich. So kann beispielsweise ein Lichtgeber, insbesondere ein Laser oder dergleichen, an Bord der Markierungserfassungseinrichtung vorgesehen sein. Wenn dieser Laser oder sonstige Lichtgeber auf die Werkstückmarkierung gerichtet ist und mit dieser koinzident ist, gilt die Werkstückmarkierung als erfasst. Beispielsweise ist dazu noch eine Bedienhandlung sinnvoll, d.h. dass der Bediener beispielsweise auf eine Taste der Markierungserfassungseinrichtung drückt, um die Koinzidenz zwischen der optischen Referenz, insbesondere dem Lichtstrahl und der Werkstückmarkierung als Auslösebedingung für die Koordinatenerfassung zu aktivieren. Dies wurde bereits oben im Zusammenhang mit der vorteilhaften Auslösebedingung erläutert.

Eine an sich eigenständige Erfindung stellt die nachfolgende Maßnahme dar, die aber auch eine vorteilhafte Ausgestaltung der obigen Erfindung sein kann. Die Markierungserfassungseinrichtung kann eine von der Hand-Werkzeugmaschine separate oder separierbare Komponente sein.

Besonders bevorzugt ist die Markierungserfassungseinrichtung deutlich leichter als die Hand-Werkzeugmaschine. Sie weist beispielsweise nur etwa 10 - 20 % des Gewichts der Hand-Werkzeugmaschine auf.

Weiterhin ist es vorteilhaft, wenn die Markierungserfassungseinrichtung eine kleinere räumliche Ausdehnung als die Hand-Werkzeugmaschine hat, beispielsweise nur 10 - 20 % der räumlichen Ausdehnung der Hand-Werkzeugmaschine in zumindest einer Dimension, beispielsweise einer Querbreite, Querlänge oder dergleichen, oder aber auch in mehreren Dimensionen. Die Markierungserfassungseinrichtung kann beispielsweise in zwei Dimensionen, insbesondere im Querschnitt, deutlich kleiner als die Hand-Werkzeugmaschine sein. Allerdings ist es möglich, dass sie durchaus auch etwa die Länge oder Höhe der Hand-Werkzeugmaschine aufweist, beispielsweise wenn die Markierungserfassungseinrichtung stiftartig oder stabförmig ist.

Es ist auch möglich, dass die Markierungserfassungseinrichtung einen Bestandteil der Werkzeugmaschine bildet, beispielsweise indem die Referenz an dem Führungselement angeordnet ist. Auch die Ermittlung der Koordinatendaten in Zusammenhang mit der Anwahl der Werkstückmarkierung kann direkt von der Hand-Werkzeugmaschine geleistet werden, wenn sie die Markierungserfassungseinrichtung an Bord hat.

Die Hand-Werkzeugmaschine weist zweckmäßigerweise eine drahtgebundene oder drahtlose Schnittstelle oder beide derartige Schnittstellen für die Markierungserfassungseinrichtung auf. Die Markierungserfassungseinrichtung kann über die jeweilige Schnittstelle die Koordinatendaten der mindestens einen Werkstückmarkierung an die Hand-Werkzeugmaschine senden, beispielsweise über Bluetooth, WLAN oder dergleichen. Aber auch eine drahtgebundene Übermittlung dieser Koordinatendaten ist möglich, beispielsweise anhand von seriellen Daten, Busdaten oder dergleichen. Insbesondere ist es möglich, dass zwischen der Markierungserfassungseinrichtung und der Hand-Werkzeugmaschine eine Bus-Schnittstelle oder eine Bus-Übertragung mit einem digitalen Protokoll vorgesehen ist, beispielsweise via Bluetooth, einem 12C-Bus oder dergleichen.

Die Hand-Werkzeugmaschine kann eine Halteaufnahme zum Halten der Markierungserfassungseinrichtung aufweisen. Beispielsweise kann eine Tasche, eine Vertiefung oder dergleichen andere Halteaufnahme für die Markierungserfassungseinrichtung vorgesehen sein. Es ist aber auch möglich, dass die Hand-Werkzeugmaschine eine Klammer oder dergleichen andere Halterung oder Halteaufnahme für die Markierungserfassungseinrichtung aufweist. Die Halteaufnahme ist beispielsweise an einem Maschinengehäuse der Hand-Werkzeugmaschine vorgesehen. Das Maschinengehäuse nimmt beispielsweise den Antriebsmotor und die Werkzeugaufnahme auf. Die Halteaufnahme kann aber auch an dem Führungselement vorgesehen sein.

Die Markierungserfassungseinrichtung ist zweckmäßigerweise motorlos oder weist keinen Antriebsmotor zum Antreiben eines Arbeitswerkzeuges auf. Mithin ist also die Markierungserfassungseinrichtung eine sozusagen manuell betätigbare oder manuell bedienbare Einrichtung, während die motorische Komponente des Systems durch die Hand-Werkzeugmaschine bereitgestellt wird. Ein Antriebsmotor ist vergleichsweise schwer, was das Gewicht der Hand-Werkzeugmaschine bestimmt. Die Markierungserfassungseinrichtung hingegen kann eine leichte und somit bequem handhabbare Baueinheit bilden oder aufweisen.

Bei der Erfassung der Werkstückmarkierung ist es jedenfalls vorteilhaft, wenn die Markierungserfassungseinrichtung nicht motorisch angetrieben oder antreibbar ist. So kann beispielsweise die Hand-Werkzeugmaschine selbst die Markierungserfassungseinrichtung aufweisen oder darstellen. Zumindest während der Erfassung der Werkstückmarkierung ist jedoch ein Betrieb der Hand-Werkzeugmaschine nicht vorgesehen. Es kann vorteilhaft vorgesehen sein, dass die Hand-Werkzeugmaschine bei der Erfassung der Werkstückmarkierung einen Betrieb des Antriebsmotors blockiert. Jedenfalls stören Vibrationen oder dergleichen andere Einflüsse des Antriebsmotors nicht, wenn die Markierungserfassungseinrichtung zumindest bei der Erfassung der mindestens einen Werkstückmarkierung nicht motorisch angetrieben ist.

Die Markierungserfassungseinrichtung umfasst zweckmäßigerweise einen Stift oder ist stiftförmig. Mithin ist also die Erfassungseinrichtung vorzugsweise in der Art eines Zeigegeräts ausgestaltet. Bevorzugt ist die Referenz durch eine Spitze oder ein Längsende des Stifts oder der stiftförmigen Markierungseinrichtung gebildet.

Es ist auch möglich, dass die Markierungserfassungseinrichtung einen optischen Lichtgeber zur Bereitstellung der optischen Referenz aufweist, beispielsweise einen Laserstrahl. Auch in diesem Zusammenhang ist es vorteilhaft, wenn eine Abstandsmessung vorgesehen ist. Wenn also beispielsweise der optische Lichtgeber einen vorgegebenen Grenzabstand zu der Werkstückmarkierung nicht überschreitet, ist die Erfassung der Koordinaten oder Koordinatendaten sozusagen freigeschaltet. Der Lichtgeber muss also nahe bei der Werkstückmarkierung sein, damit die Koordinatenerfassung bezüglich des zumindest zweidimensionalen Koordinatensystems aktiv geschaltet wird.

Bei den Führungsmitteln ist es möglich, dass sie sozusagen die Werkzeugaufnahme aktiv führen oder auch nur Hilfsinformationen für den Bediener zu einem optimalen Führen der Werkzeugaufnahme und mithin des Arbeitswerkzeugs ausgeben.

So können die Führungsmittel beispielsweise eine Ausgabeeinrichtung zur optischen und/oder akustischen Ausgabe einer den Arbeitsbereich betreffenden oder definierenden Vorgabeinformation, beispielsweise einer Soll-Arbeitslinie, für den Bediener aufweisen. Der Arbeitsbereich kann aber auch eine räumliche Gestalt haben derart, dass er beispielsweise eine Arbeitsfläche definiert. Auch diese Arbeitsfläche bzw. der flächige Arbeitsbereich kann an der Ausgabeeinrichtung angezeigt werden. Bei der Ausgabeeinrichtung handelt es sich beispielsweise um ein Display, insbesondere ein LCD-Display, ein grafik-fähiges Display oder dergleichen.

Die Führungsmittel weisen zweckmäßigerweise eine Stellmotoranordnung mit zumindest einem Stellmotor zum Verstellen einer Relativposition der Werkzeugaufnahme bezüglich des Führungselements auf. Der mindestens eine Stellmotor ist beispielsweise ein Elektromotor, ein pneumatischer Antrieb oder dergleichen. Somit kann das Führungsmittel oder können die Führungsmittel sozusagen die Werkzeugaufnahme, insbesondere den Antriebsmotor einschließlich der Werkzeugaufnahme, relativ zum Führungselement verstellen, so dass die Werkzeugaufnahme und somit das Arbeitswerkzeug sozusagen einer Soll-Arbeitslinie oder einem Soll-Arbeitsbereich folgt. Mithin wird also der Arbeitsbereich sozusagen automatisch eingehalten oder geregelt.

Der Arbeitsbereich umfasst, wie schon erwähnt, vorzugsweise eine Arbeitslinie, entlang derer das Arbeitswerkzeug bezüglich des Werkstücks zu führen ist. Es ist auch möglich, dass der Arbeitsbereich eine zur Bearbeitung des Werkstücks vorgesehene Bearbeitungsfläche des Werkstücks umfasst oder dadurch gebildet ist.

Bevorzugt ist es, wenn die Führungsmittel und/oder die Markierungserfassungseinrichtung zur Ermittlung der Arbeitsbereichsdaten des Arbeitsbereichs, beispielsweise zu einer zumindest Abschnittsweise geraden Arbeitslinie oder einer vollständigen Arbeitslinie, die sich zwischen den Werkstückmarkierungen erstreckt, anhand von auf das zumindest zweidimensionale Koordinatensystem bezogene Koordinatendaten mindestens zweier Werkstückmarkierungen, die im Abstand zueinander angeordnet sind, ausgestaltet. So können beispielsweise zwei Strichmarkierungen oder Punktmarkierungen an dem Werkstück vorgesehen sein. Die Markierungserfassungseinrichtung oder die Führungsmittel können deren Position sozusagen bezüglich des zweidimensionalen Koordinatensystems auswerten und daraus eine Arbeitslinie ermitteln. Wenn mehrere derartige Werkstückmarkierungen vorhanden sind, ist vorzugsweise eine Interpolation möglich, um auf diesem Wege eine virtuelle gerade Arbeitslinie zu erzeugen. Es ist aber auch möglich, dass mehrere Werkstückmarkierungen sozusagen eingelesen werden bzw. deren Koordinatendaten durch die Markierungserfassungseinrichtung ermittelt werden, um anschließend beispielsweise eine winkelige Abschnitte und/oder Krümmungen und/oder Bogenlinien aufweisende Arbeitslinie oder dergleichen durch die Führungsmittel oder die Markierungserfassungseinrichtung zu ermitteln. Somit ist also das System in der Lage, sozusagen selbst die Arbeitsbereichsdaten zu ermitteln.

Die Führungsmittel oder die Markierungserfassungseinrichtung oder beide weisen zweckmäßigerweise eine Empfangsschnittstelle zum Empfangen von den Arbeitsbereich, beispielsweise eine Arbeitslinie, definierenden Vorgabedaten auf. Beispielsweise ist eine USB-Schnittstelle, eine WLAN-Schnittstelle, eine Bluetooth-Schnittstelle oder dergleichen zum Empfang derartiger Vorgabedaten als Empfangsschnittstelle vorgesehen. Die Vorgabedaten werden beispielsweise von einer CAD-Einrichtung, einem Computer oder dergleichen empfangen. Weiterhin sind die Führungsmittel und/oder die Markierungserfassungseinrichtung zur Ermittlung der Arbeitsbereichsdaten des Arbeitsbereichs in Abhängigkeit von den Vorgabedaten ausgestaltet. Beispielsweise richten die Führungsmittel oder die Markierungserfassungseinrichtung den Arbeitsbereich in Abhängigkeit von der mindestens einen erfassten Werkstückmarkierung aus und/oder legen einen Anfangspunkt für den Arbeitsbereich fest.

Bevorzugt ist es, wenn das System zur Erfassung einer jeweiligen Position der Markierungserfassungseinrichtung und/oder der Hand-Werkzeugmaschine mindestens eine in dem Arbeitsraum, in welchem das Werkstück angeordnet ist, platzierbare Koordinatenerfassungseinrichtung aufweist, die eine von der Hand-Werkzeugmaschine oder der Referenz der Markierungserfassungseinrichtung separate Baueinheit bildet. Bei der Koordinatenerfassungseinrichtung kann es sich beispielsweise um eine Anordnung von einer oder mehreren Kameras, insbesondere einer Stereokamera oder mehreren Stereokameras, handeln. Die Koordinatenerfassungseinrichtung erfasst sozusagen die Position der an der Werkstückmarkierung auszurichtenden Referenz oder der Hand-Werkzeugmaschine oder beiden. Die Koordinatenerfassungseinrichtung kann z.B. einen Teil der Markierungserfassungseinrichtung bilden.

Bei den obigen Szenarien wurde primär davon ausgegangen, dass das Werkstück nach der Erfassung der Werkstückmarkierung oder den Werkstückmarkierungen an Ort und Stelle bleibt, also die räumliche oder örtliche Position des Werkstücks zu dem zweidimensionalen oder dreidimensionalen Koordinatensystem erhalten bleibt. Die Koordinatendaten der mindestens einen Werkstückmarkierung bleiben also bis zur Werkstückbearbeitung unverändert.

Die obigen Maßnahmen können aber auch im Zusammenhang mit der nachfolgenden Ausgestaltung der Erfindung Anwendung finden, bei der das Werkstück nach der Erfassung der mindestens einen Werkstückmarkierung nicht ortsfest bleiben muss, sondern noch vor der Werkstückbearbeitung bewegt wird, beispielsweise umgedreht wird, an einen günstigeren Bearbeitungsort verlegt wird oder dergleichen.

Das System umfasst nämlich zweckmäßigerweise ein Verfolgungsmittel zur Verfolgung einer Bewegung des Werkstücks nach der Erfassung der mindestens einen Werkstückmarkierung durch die Markierungserfassungseinrichtung bis zu einer zu der Bearbeitung des Werkstücks durch die Hand-Werkzeugmaschine vorgesehenen Bearbeitungsposition. Die Verfolgungsmittel sind zur Bereitstellung von dieser Bewegung oder die Bearbeitungsposition charakterisierenden Verfolgungsdaten ausgestaltet, so dass die Führungsmittel der Hand-Werkzeugmaschine das Arbeitswerkzeug anhand von Arbeitsbereichsdaten führen oder führen können, die anhand der Koordinatendaten der mindestens einen Werkstückmarkierung und der Verfolgungsdaten ermittelt sind. So kann beispielsweise eine Translation der Koordinatendaten der mindestens einen Werkstückmarkierung anhand der Verfolgungsdaten durchgeführt werden, so dass eine neue Position der Werkstückmarkierung ermittelbar ist, die sozusagen transformierte Koordinatendaten umfasst. Die Koordinatendaten der Werkstückmarkierung werden also entsprechend der neuen Position des Werkstücks in Bezug auf das zumindest zweidimensionale Koordinatensystem sozusagen umgerechnet oder weiter verfolgt.

Die Verfolgung kann nun beispielsweise anhand der oben erwähnten, im Arbeitsraum platzierbaren Koordinatenerfassungseinrichtung, beispielsweise einer Stereokamera erfolgen. Diese kann z.B. die bei der Erfassung der mindestens einen Werkstückmarkierung vorhandene Position des Werkstücks und anschließend eine vor der Bearbeitung durch die Hand-Werkzeugmaschine eingenommene Position des Werkstücks bezüglich des zumindest zweidimensionalen Koordinatensystems erfassen.

Besonders komfortabel ist jedoch die folgende Maßnahme, bei der vorgesehen ist, dass mindestens eine an dem Werkstück nach der Erfassung der mindestens einen Werkstückmarkierung und zumindest bis zum Erreichen der Bearbeitungsposition befestigten Werkstückpositionserfassungseinrichtung und/oder Werkstückpositionsreferenzmarkierung umfasst. Die Werkstückpositionserfassungseinrichtung kann eine aktive Komponente sein, die beispielsweise die bereits eingangs erwähnten Referenzinformationen eines oder mehrerer Koordinatengeber mit erfasst. Es ist aber auch möglich, dass eine Werkstückpositionsreferenzmarkierung, beispielsweise eine Werkstückmarkierung oder dergleichen andere Markierung an dem Werkstück angebracht ist, die sozusagen vom Verfolgungsmittel verfolgt werden. Dabei handelt es sich bei der Werkstückpositionsreferenzmarkierung in einem Szenario beispielsweise um eine Werkstückkante des Werkstücks, die als Werkstückpositionsreferenzmarkierung dient. Es kann aber auch eine Werkstückpositionsreferenzmarkierung vorgesehen sein, die Haftmittel, beispielsweise Saugmittel, Klebemitteln oder dergleichen, zur Befestigung an dem Werkstück umfasst. Diese Werkstückpositionsreferenzmarkierung weist beispielsweise einen Farbkontrast, Hell-Dunkel-Kontrast oder dergleichen auf, der von dem Verfolgungsmittel erfassbar ist.

An der Markierungserfassungseinrichtung und/oder der Hand-Werkzeugmaschine und/oder der bereits erwähnten Werkstückpositionserfassungseinrichtung sind zweckmäßigerweise eine Mehrzahl von Geräte-Referenzmarkierungen und/oder Sensoren zur Ermittlung der Orientierung in dem zumindest zweidimensionalen Koordinatensystem angeordnet. Die Geräte-Referenzmarkierungen können beispielsweise von einer Kamera, die im Arbeitsraum angeordnet ist, erfasst werden.

Zu einer geometrisch exakten Koordinatenbestimmung trägt die folgende Maßnahme bei. An der Markierungserfassungseinrichtung und/oder der Hand-Werkzeugmaschine sind mindestens zwei Geräte-Referenzmarkierungen oder mindestens zwei Sensoren zur Ermittlung der Orientierung in dem zumindest zweidimensionalen Koordinatensystem an voneinander entfernen Extremitäten oder Endbereichen oder beiden der jeweiligen Markierungserfassungseinrichtung oder Hand-Werkzeugmaschine angeordnet. Weiterhin ist es vorteilhaft, wenn der Abstand der Geräte-Referenzmarkierungen oder Sensoren zumindest zwei Drittel oder zumindest der Hälfte einer jeweiligen Erstreckungslänge der Hand-Werkzeugmaschine oder der Markierungserfassungseinrichtung entspricht. Wenn also eine Maschine beispielsweise eine Höhe H aufweist, sind die Sensoren oder Geräte-Referenzmarkierungen in Bezug auf diese Höhe in einem Abstand angeordnet, die der halben Höhe oder einem Drittel der Höhe entsprechen.

Vorteilhaft ist vorgesehen, dass die Werkzeugaufnahme bezüglich des Führungselements anhand einer Lageranordnung beweglich gelagert und anhand einer Stellmotoranordnung antreibbar ist, wobei die Hand-Werkzeugmaschine zur Relativverstellung der Werkzeugaufnahme bezüglich des Führungselements anhand der Lageranordnung um zumindest eine die Führungsfläche winkelig, insbesondere rechtwinkelig, durchsetzende Stellschwenkachse schwenkbar ist, wobei die Hand-Werkzeugmaschine eine Steuerungseinrichtung zur Ansteuerung der Stellmotoranordnung aufweist.

Zweckmäßig ist es dabei, wenn die Steuerungseinrichtung zur Ansteuerung der Stellmotoranordnung derart ausgestaltet ist, dass die Stellmotoranordnung die Werkzeugaufnahme bezüglich des Führungselements unter Beibehaltung einer Schwenkstellung bezüglich der Stellschwenkachse mit einer zu der Führungsfläche des Führungselements parallelen Bewegungsrichtungskomponente bezüglich des Führungselements verstellt.

Die Steuerungseinrichtung hat zu einer derartigen Ansteuerung der Stellmotoranordnung beispielsweise eine Regelungsanordnung oder Regelung.

Zweckmäßigerweise hat die Hand-Werkzeugmaschine eine oder mehrere Betätigungshandhaben zum Ergreifen durch einen Bediener. Vorzugsweise ist vorgesehen, dass die Hand-Werkzeugmaschine mindestens eine Betätigungshandhabe zum Verstellen des Führungselements in der Arbeitsrichtung oder entgegen der Arbeitsrichtung aufweist, wobei die Stellmotoranordnung und die Lageranordnung zwischen der Werkzeugaufnahme und der mindestens einen Betätigungshandhabe angeordnet sind. Beispielsweise ist die mindestens eine Betätigungshandhabe an dem Führungselement angeordnet. Die mindestens eine Betätigungshandhabe umfasst beispielsweise einen Handgriff, einen Handhabungsvorsprung, eine Betätigungsfläche oder dergleichen. Die Lageranordnung und die Stellmotoranordnung positionieren die Werkzeugaufnahme relativ zu der Betätigungshandhabe, um das Arbeitswerkzeug relativ zu dem Arbeitsbereich, insbesondere einer Arbeitslinie, lagerichtig zu halten. Der Bediener hingegen sorgt für den Vorschub des Arbeitswerkzeugs entlang der Arbeitsrichtung oder entgegen der Arbeitsrichtung. Mithin bewegt also der Bediener das Arbeitswerkzeug sozusagen in der Arbeitsrichtung vor und zurück, indem er an der mindestens einen Betätigungshandhabe Kraft auf die Hand-Werkzeugmaschine ausübt, während die Stellmotoranordnung und Lageranordnung für die Positionierung des Arbeitswerkzeugs sorgen.

Es ist ein Grundgedanke dabei, dass die Steuerungseinrichtung zusammen mit der Stellmotoranordnung und der Lageranordnung dafür sorgen, dass die Werkzeugaufnahme nicht nur bezüglich ihres Arbeitswinkels verstellt wird, d.h. einen anderen Stellwinkel bezüglich des Führungselements einnimmt, sondern dass die Werkzeugaufnahme unter Beibehaltung einer jeweiligen Schwenkstellung um die Stellschwenkachse bezüglich des Führungselements zusätzlich mit mindestens einer zu der Führungsfläche parallelen Bewegungsrichtungskomponente verstellt wird. Mithin ist diese Verstellung eine translatorische oder verschiebende Verstellung. Der Bewegungsfreiheitsgrad der Bewegungsrichtungskomponente ist also ein translatorischer oder verschiebender Bewegungsfreiheitsgrad. So ist beispielsweise eine Art Parallelverstellung der Werkzeugaufnahme bei beibehaltenem Stellwinkel durch die Steuerungseinrichtung einstellbar oder ansteuerbar. Wenn also der Bediener beispielsweise das Führungselement, z.B. einen Sägetisch oder ein dergleichen anderes Führungselement, quer zur eigentlichen Bewegungsrichtung, beispielsweise rechtwinkelig quer oder schräg quer, verstellt, steuert die Steuerungseinrichtung die Stellmotoranordnung zur Verstellung der Werkzeugaufnahme derart parallel zum Führungselement an, dass die Winkelstellung des Arbeitswerkzeugs relativ zu einer Arbeitslinie nicht nur am Einschnittbereich in das Arbeitswerkzeug, sondern auch in Verlängerung dazu und oder in Bezug auf eine in Eingriff mit dem Werkzeug befindliche Arbeitslänge des Arbeitswerkzeug gleich bleibt.

So ist beispielsweise ein Sägeblatt oder dergleichen anderes Trennblatt, welches als Arbeitswerkzeug geeignet ist, durch die Steuerungseinrichtung und die Steuermotoranordnung derart verstellbar, dass die Winkelstellung des gesamten Blattes relativ zu einer beispielsweise geraden Arbeitslinie und/oder relativ zu einer Länge des Arbeitswerkzeugs, die in das Werkstück aktuell eingreift oder eintaucht, beibehalten ist.

Die Steuerungseinrichtung steuert die Stellmotoranordnung vorteilhaft derart an, dass das Arbeitswerkzeug bezüglich einer Längslänge, mit der es in das Werkstück einschneidet, seine Position, nämlich seine Winkelposition und/oder seine Längsposition beibehält, auch wenn das Führungselement relativ zu der Werkzeugaufnahme durch den Bediener verstellt wird.

Das Arbeitswerkzeug weist zweckmäßigerweise ein bezüglich der Arbeitsrichtung vorderen Eindringbereich zum Eindringen des Werkstücks auf. Der Eindringbereich umfasst beispielsweise eine Zahnanordnung oder eine sonstige Schnittkante, die in das Werkstück einschneidet. Die Steuerungseinrichtung ist zu einer Ansteuerung der Stellmotoranordnung derart ausgestaltet, dass der Eindringbereich bei einer Schwenkbewegung der Werkzeugaufnahme um die Stellachse und/oder einer Bewegung mit der zur der Führungsfläche des Führungselements parallelen Bewegungsrichtungskomponente eine Relativposition bezüglich der Arbeitsrichtung beibehält. Mithin wird durch diese Maßnahme sichergestellt, dass der Eindringbereich des Arbeitswerkzeugs keine Vorschubbewegung in Richtung der Arbeit fährt, wenn die Stellmotoranordnung sozusagen eine ungeeignete oder unerwünschte Bewegung des Führungselements korrigiert, indem es das Führungselement und die Werkzeugaufnahme relativ um die Stellschwenkachse verstellt oder mit der zu der Führungsfläche des Führungselements parallelen Bewegungsrichtungskomponente relativ antreibt. Dabei ist zweckmäßig, dass der Eindringbereich nur dann eine Vorschubbewegung oder auch eine sozusagen negative Vorschubbewegung, nämlich ein Zurückziehen oder eine Zurückbewegung entgegen der Arbeitsrichtung erfährt, wenn dies der Bediener durch eine entsprechende Bedienhandlung am Führungselement tatsächlich vorgibt, indem er das Führungselement bezüglich der Arbeitsrichtung vor oder zurück bewegt. Wenn der Bediener also das Führungselement nicht in der Arbeitsrichtung nach vorn oder nach hinten betätigt, bleibt der Eindringbereich des Arbeitswerkzeugs in das Werkstück sozusagen an Ort und Stelle, während die Stellmotoranordnung durch die Ansteuerung der Steuerungseinrichtung das Führungselement und die Werkzeugaufnahme relativ zueinander bezüglich des Stellwinkels bezüglich der Stellschwenkachse und/oder bezüglich der zu der Führungsfläche des Führungselements parallelen Bewegungsrichtungskomponente verstellt.

Die Steuerungseinrichtung ist vorteilhaft zu einer Verstellung der Werkzeugaufnahme relativ zu dem Führungselement derart ausgestaltet, dass die Werkzeugaufnahme ihre Winkellage bezüglich der beispielsweise linearen Arbeitsrichtung bei einer Verstellung des Führungselements relativ zu der Werkzeugaufnahme quer zu der Arbeitsrichtung und/oder winkelig zu der Arbeitsrichtung beibehält. Die Werkzeugaufnahme selbst wird also selbst dann, wenn das Führungselement vom Bediener verstellt wird, dies aber nicht der "gewünschten" Arbeitsrichtung entspricht, lagerichtig gehalten.

Die Steuerungseinrichtung ist zweckmäßigerweise zu einer Verstellung der Werkzeugaufnahme relativ zu dem Führungselement derart ausgestaltet, dass die Werkzeugaufnahme ihre Relativposition bezüglich eines zumindest zweidimensionalen, vorzugsweise dreidimensionalen, Koordinatensystems beibehält, welches von einer an dem Werkstück vorgesehenen Werkstückmarkierung unabhängig ist.

Das Koordinatensystem wird beispielsweise von Koordinatengebern bereitgestellt, die entsprechende Referenzinformationen versenden. Mithin sorgt also die Steuereinrichtung dafür, dass die Werkzeugaufnahme bezüglich dieses sozusagen externen Koordinatensystems ausgerichtet ist. Eine Bedienhandlung des Bedieners dahingehend, dass er das Führungselement beispielsweise quer zu der Arbeitsrichtung verstellt oder winkelig stellt, was an sich ja nicht sinnvoll ist, wird durch die Steuerungseinrichtung sozusagen automatisch korrigiert.

Die Stellschwenkachse kann eine bezüglich des Führungselements ortsfeste Achse sein. Beispielsweise ist zwischen dem Führungselement und der Werkzeugaufnahme ein entsprechendes Schwenklager vorhanden, welches die Stellschwenkachse umfasst oder definiert.

Bevorzugt ist aber, dass die Stellschwenkachse bezüglich des Führungselements nicht ortsfest ist. Die Stellschwenkachse kann beispielsweise linear verstellbar sein und/oder um eine weitere Schwenkachse schwenkbar sein.

Die Stellmotoranordnung kann mehrere Stellmotoren umfassen, beispielsweise einen ersten und einen zweiten Stellmotor oder mindestens einen zweiten Stellmotor. Es ist beispielsweise vorteilhaft, wenn die Stellmotoranordnung nur zwei, nämlich einen ersten und einen zweiten Stellmotor aufweist.

Eine Ausführungsform kann vorsehen, dass die Stellmotoranordnung ausschließlich Linearantriebe umfasst, beispielsweise einen ersten und einen zweiten Linearantrieb. Es ist aber auch möglich, dass die Stellmotoranordnung einen Drehantrieb oder mehrere Drehantriebe oder Kombinationen von Drehantrieben und Linearantrieben aufweist oder umfasst.

Die Stellmotoranordnung und/oder die Lageranordnung sind innerhalb oder oberhalb einer Projektionsfläche des Führungselements auf dem zu bearbeitenden Werkstück vorteilhaft angeordnet. Der Vorteil davon ist es, dass die Stellmotoranordnung sozusagen nicht oder nur unwesentlich über die Projektionsfläche des Führungselements seitlich vorstehen. Bevorzugt ist es insbesondere, wenn die Stellmotoranordnung und/oder die Lageranordnung vollständig innerhalb bzw. oberhalb der Projektionsfläche des Führungselements angeordnet sind.

Eine Ausführungsform der Erfindung kann vorteilhaft vorsehen, dass die Stellmotoranordnung und/oder die Lageranordnung nicht seitlich vor die Führungsfläche des Führungselements vorstehen. Der Vorteil dieser Konstruktion ist es, dass die Lageranordnung oder die Stellmotoranordnung beim Betrieb nicht stört, d.h. der Bediener kann beispielsweise das Führungselement an dem Werkstück entlang führen, ohne dass er mit einer Komponente von Stellmotoranordnung oder Lageranordnung sozusagen an einem Hindernis hängenbleibt.

Nachfolgend werden Lagerkonzepte erläutert, bei denen Linearlager vorgesehen sind. Man könnte ein Linearlager auch als ein Schiebelager bezeichnen, welches eine ausschließlich translatorische Schiebebewegung oder eine Schiebebewegung entlang einer linearen Verschiebebahn, erlaubt.

Die Lageranordnung weist zweckmäßigerweise ein erstes Linearlager und mindestens ein zweites Linearlager auf. Es können auch ausschließlich ein erstes und ein zweites Linearlager oder mindestens ein weiteres Linearlager vorgesehen sein.

Ein jeweiliges Linearlager dient zu einer linearen Verstellung der Werkzeugaufnahme bezüglich des Führungselements, insbesondere zur linearen Verstellung der Werkzeugaufnahme quer zu der Arbeitsrichtung. Es ist auch möglich, dass ein Linearlager sich im Wesentlichen längs der Arbeitsrichtung erstreckt.

Das erste und das zweite Linearlager weisen zweckmäßigerweise zueinander parallele Stellachsen auf. Die Lagerachsen der Linearlager können zumindest in einer Position der Linearlager parallel zueinander sein. Die Stellachsen können aber auch im Wesentlichen parallel zueinander sein, d.h. leicht schräg geneigt in einem Winkel von beispielsweise 0° bis 5°. Ein Linearlager kann z.B. drehbar gelagert sein, sodass die Lagerachsen der Linearlager eine Winkelstellung, insbesondere eine kleine Winkelstellung abweichend von der Parallellage, aufweisen, wenn die Linearlager relativ zueinander geschwenkt sind, beispielsweise anhand eines oder mehrerer der nachfolgend erläuterten Drehlager.

An dieser Stelle ist nämlich zu bemerken, dass zumindest ein Linearlager auch an einem Schwenklager oder einer schwenkbaren Lageraufnahme schwenkbar gelagert sein kann.

Es ist jedoch vorteilhaft, wenn zumindest ein Linearlager ortsfest bezüglich eines Antriebsaggregats oder der Werkzeugaufnahme ist, so dass seine Stellachse sich beispielsweise in längs der Arbeitsrichtung erstreckt.

An dem Führungselement sind beispielsweise ortsfest angeordnete Lageraufnahmen für das erste und/oder das zweite Linearlager vorgesehen, an denen ein jeweiliges Lagerglied des jeweiligen Linearlagers linear verschieblich gelagert ist. Das Lagerglied kann ein angetriebenes Bauteil sein oder auch ein passives, sozusagen mitgenommenes Bauteil.

Bevorzugt ist es, wenn ein jeweiliges Lagerglied beispielsweise durch das Stellglied eines Linearantriebs gebildet ist. Die Lageraufnahme kann beispielsweise an einem Stator eines Stellmotors vorgesehen sein.

Die Lageranordnung umfasst zweckmäßigerweise mindestens zwei Linearlager, deren Lagerachsen quer zu der Arbeitsrichtung orientiert sind. Die Lagerachsen können beispielsweise im Wesentlichen rechtwinkelig quer zur der Arbeitsrichtung verlaufen. An dieser Stelle ist zu bemerken, dass die Lagerachsen auch mehrere Winkellagen quer zu der Arbeitsrichtung aufweisen können, beispielsweise wenn ein jeweiliges Linearlager an einem Schwenklager schwenkbar gelagert ist.

Bevorzugt ist es, wenn die Lageranordnung möglichst wenig Drehfreiheitsgrade aufweist. Eine Ausführungsform der Erfindung kann vorsehen, dass die Lageranordnung maximal zwei, insbesondere maximal drei Drehlager aufweist.

Ein in der Zeichnung dargestelltes Ausführungsbeispiel sieht vor, dass die Lageranordnung mindestens oder exakt drei Drehlager und mindestens oder exakt zwei Linearlager aufweist, insbesondere ausschließlich drei Drehlager und zwei Linearlager. Ein Linearlager ist vorzugsweise drehbar oder schwenkbar am Führungselement anhand eines der Drehlager gelagert.

Es sind aber Ausführungsformen möglich, bei denen die Lageranordnung zwei Linearlager und drei Drehlager oder Schwenklager aufweisen. Dabei ist es vorteilhaft, wenn eines der Schwenklager oder Drehlager zwischen zwei Linearlagern angeordnet ist und diese miteinander verbindet. Die Lagerglieder der Linearlager sind beispielsweise, insbesondere an ihren Längsendbereichen, miteinander schwenkbeweglich durch das Drehlager verbunden.

Bevorzugt ist es, wenn die Lageranordnung bezüglich der Arbeitsrichtung ein vor der Werkzeugaufnahme angeordnetes Lager, beispielsweise ein Drehlager und/oder mindestens ein Linearlager, und ein bezüglich der Arbeitsrichtung hinter der Werkzeugaufnahme angeordnetes Lager, beispielsweise ebenfalls ein Drehlager und /oder ein Linearlager, aufweist. Es ist aber auch möglich, dass beispielsweise ein Lager sozusagen in Höhe der Werkzeugaufnahme bezüglich der Arbeitsrichtung angeordnet ist, während das andere Lager in Arbeitsrichtung dahinter oder davor zwischen dem Führungselement und der Werkzeugaufnahme vorgesehen ist.

Weiterhin ist es möglich, dass die Lageranordnung ausschließlich in Bezug auf die Arbeitsrichtung vor oder ausschließlich in Bezug auf die Arbeitsrichtung hinter der Werkzeugaufnahme angeordnetes Lager, beispielsweise Drehlager, Linearlager oder dergleichen aufweist.

Die Werkzeugaufnahme ist zweckmäßigerweise an einem den Antriebsmotor aufweisenden Antriebsaggregat der Hand-Werkzeugmaschine vorgesehen. Das Antriebsaggregat ist anhand der Lageranordnung bezüglich des Führungselements beweglich gelagert. Zwischen dem Antriebsaggregat und dem Führungselement ist vorteilhaft die Stellmotoranordnung angeordnet. Bei dieser Ausführungsform ist es möglich, dass eine Winkelstellung der Werkezugaufnahme gleich bleibt. Die Relativposition von Werkzeugaufnahme und Antriebsmotor wird dabei nicht verändert, abgesehen von einer durch das Antreiben durch den Antriebsmotor verändernden Drehwinkellage oder Linearlage der Werkzeugaufnahme relativ zum Antriebsmotor.

Bei der obigen Ausführungsform wie auch bei der nachfolgenden Ausführungsform ist es vorteilhaft, wenn zwischen dem Antriebsmotor und der Werkzeugaufnahme ein Getriebe, beispielsweise ein Planetengetriebe, ein Schaltgetriebe, ein Umlenkgetriebe oder dergleichen, vorgesehen ist. Es ist aber auch möglich, dass der Antriebsmotor die Werkzeugaufnahme direkt, also ohne dazwischen geschaltetes Getriebe, antreibt.

Eine weitere Ausführungsform der Erfindung kann vorsehen, dass die Werkzeugaufnahme durch die Stellmotoranordnung und die Lageranordnung bezüglich des Führungselements verstellt wird, während das Antriebsaggregat bezüglich des Führungselements ortsfest ist. Dazu ist beispielsweise eine entsprechende Drehkopplung oder Bewegungskopplung zwischen dem Antriebsmotor und der Werkzeugaufnahme vorgesehen, beispielsweise anhand einer biegsamen Drehwelle, eines Umlenkgetriebes oder dergleichen. Denkbar wäre beispielsweise ein Kegelradgetriebe.

Das Arbeitswerkzeug kann in einer Ausführungsform der Erfindung beispielsweise als ein Fräswerkzeug, ein Schleifwerkzeug oder dergleichen ausgestaltet sein. Eine weitere Ausführungsform der Erfindung, die in der Zeichnung näher dargestellt ist, sieht vor, dass das Arbeitswerkzeug ein Trennwerkzeug mit einer Flachgestalt, beispielsweise ein Sägeblatt, eine Trennscheibe oder dergleichen, ist oder umfasst. Ferner kann der Antriebsmotor beispielsweise ein stangenartiges Trennwerkzeug antreiben, insbesondere bei einer Ausgestaltung der Hand-Werkzeugmaschine als eine Stichsäge.

Der Antriebsmotor ist zweckmäßigerweise zu einem Drehantreiben der Werkzeugaufnahme angeordnet und/oder ausgestaltet. Selbstverständlich wäre es möglich, dass der Antrieb der Werkzeugaufnahme oder der Antriebsmotor auch eine oszillatorische Antriebsbewegung leistet. So kann beispielsweise ein Oszillationsgetriebe zwischen der Werkzeugaufnahme und dem Antriebsmotor vorgesehen sein.

Die Steuerungseinrichtung ist zweckmäßigerweise zu einer Ansteuerung der Stellmotoranordnung zu einer Parallelverstellung des Trennwerkzeugs bezüglich des Führungselements in einer zu der Flachseite des Trennwerkzeugs parallelen Ebene ausgestaltet. So kann also beispielsweise das Trennwerkzeug parallel zu seiner Flachseite verstellt werden, wobei nämlich der eingangs genannte Stellwinkel zwischen der Werkzeugaufnahme und dem Führungselement beibehalten wird.

Bevorzugt ist es, wenn die Hand-Werkzeugmaschine eine Anzeigeeinrichtung zur Anzeige eines durch die Stellmotoranordnung quer zu der Arbeitsrichtung einstellbaren Stellbereichs der Werkzeugaufnahme und/oder des an der Werkzeugaufnahme angeordneten Arbeitswerkzeugs aufweist. So kann der Bediener beispielsweise dadurch kontrollieren, dass sich die Werkzeugaufnahme oder das Arbeitswerkzeug noch innerhalb eines Stellbereichs befindet, der durch die Stellmotoranordnung einstellbar ist. Wenn dieser Stellbereich verlassen wird, ist die gewünschte Werkstückbearbeitung nicht mehr möglich.

Weiterhin ist es zweckmäßig, wenn die Hand-Werkzeugmaschine eine Anzeigeeinrichtung zur Anzeige durch die Stellmotoranordnung eingestellten Ist-Position der Werkzeugaufnahme und/oder des an der Werkzeugaufnahme angeordneten Arbeitswerkzeugs und/oder zur Anzeige einer durch die einzustellenden Soll-Position der Werkzeugaufnahme und/oder des an der Werkzeugaufnahme angeordneten Arbeitswerkzeugs aufweist. So kann der Bediener auf diesem Wege kontrollieren, dass die Werkzeugaufnahme oder das Arbeitswerkzeug oder beide sich in der gewünschten Ist-Position befinden. Weiterhin kann der Bediener durch die Anzeige der Soll-Position von Werkzeugaufnahme oder Arbeitswerkzeug nachvollziehen, welche Einstellung die Stellmotoranordnung sozusagen demnächst durchführen wird.

Nachfolgend werden Ausführungsbeispiele der Erfindung anhand der Zeichnung erläutert. Es zeigen:

Figur 1    eine perspektivische Schrägansicht, umfassend eines Systems mit einer Hand-Werkzeugmaschine sowie zwei Koordinatengebern und einem Werkstück vor der Werkstückbearbeitung,

Figur 2    das System gemäß Figur 1, jedoch bei der Werkstückbearbeitung durch die Hand-Werkzeugmaschine,

Figur 3    eine Detailansicht eines Koordinatengebers des Systems gemäß Figur 1,

Figur 4    ein weiteres System mit Markierungserfassungseinrichtungen, die ein Display aufweisen sowie einer Referenzmarkierung,

Figur 5    eine schematische Draufsicht auf das Werkstück gemäß Figur 1 sowie die Hand-Werkzeugmaschine gemäß Figur 1 bei der Werkstückbearbeitung, wobei eine Anzeigeeinrichtung schematisch dargestellt ist,

Figur 6    eine schematische Draufsicht auf eine Bewegungskinematik einer Hand-Werkzeugmaschine in der Art der in den Figuren 1, 2, 4 dargestellten Hand-Werkzeugmaschine mit einer ersten Stellmotoranordnung sowie einer ersten Lageranordnung,

Figur 7    die Hand-Werkzeugmaschine gemäß Figur 6 in einer ersten Relativposition von Werkzeugaufnahme und Führungselement,

Figur 8    die Hand-Werkzeugmaschine gemäß Figuren 6, 7 in einer zweiten Relativposition von Werkzeugaufnahme und Führungselement,

Figur 9    eine weitere Ausgestaltung einer Hand-Werkzeugmaschine mit einem anderen Lagerkonzept sowie einer anderen Stellmotoranordnung, in einer Grundposition,

Figur 10    die Hand-Werkzeugmaschine gemäß Figur 9 in einer ersten Stellposition,

Figur 11    die Hand-Werkzeugmaschine gemäß Figuren 9, 10 in einer zweiten Stellposition,

Figur 12    eine weitere Lageranordnung sowie Stellmotoranordnung einer Hand-Werkzeugmaschine in schematischer Darstellung,

Figur 13    die Steuerungseinrichtung der Hand-Werkzeugmaschinen gemäß vorstehenden Figuren in schematischer Darstellung,

Figur 14    eine Abwandlung des System gemäß Figur 1, wobei das zu bearbeitende Werkstück in einer ersten Stellung im Arbeitsraum angeordnet ist,

Figur 15    die Anordnung gemäß Figur 14, wobei das zu bearbeitende Werkstück in einer zweiten Stellung im Arbeitsraum angeordnet ist, und

Figur 16    eine schematische Darstellung einer Markierungserfassungseinrichtung gemäß Figur 1, und

Figur 17    ein System mit einer Hand-Werkzeugmaschine, die eine Kamera aufweist, und

Figur 18    das System gemäß Figur 1, jedoch mit mehreren lokalen Koordinatensystemen.

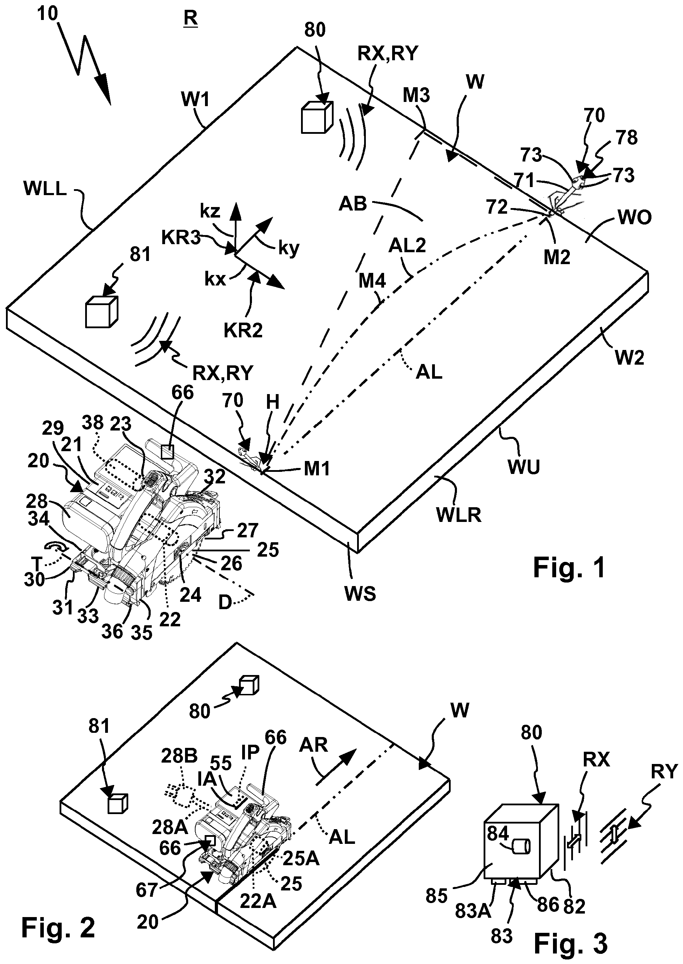

Eine Hand-Werkzeugmaschine 20 eines Systems gemäß Figur 1 weist ein Maschinengehäuse 21 auf, in welchem ein Antriebsmotor 22 aufgenommen ist. Der Antriebsmotor 22 ist durch einen Schalter 23 einschaltbar und ausschaltbar. Ein Bediener kann den Schalter 23 beispielsweise drücken. Der Antriebsmotor 22 dient zum Antreiben einer Werkzeugaufnahme 24, so dass sich diese um eine Drehachse D dreht. Zwischen dem Antriebsmotor 22 und der Werkzeugaufnahme 24 kann ein Getriebe 22A vorgesehen sein.

An der Werkzeugaufnahme 24 ist ein Arbeitswerkzeug 25 lösbar befestigbar, beispielsweise anhand einer Schraube, einer Bajonettverbindung oder dergleichen. Das Arbeitswerkzeug 25 ist vorliegend ein Trennwerkzeug 25A. Das Arbeitswerkzeug 25 hat eine scheibenartige oder blattartige Gestalt. Beispielswiese handelt es sich bei dem Arbeitswerkzeug 25 um ein Sägeblatt.

Die Hand-Werkzeugmaschine 20 ist eine Sägemaschine, insbesondere eine Tauchsägemaschine oder dergleichen. Bevorzugt ist die Hand-Werkzeugmaschine 20 für eine Holzbearbeitung vorgesehen, wobei auch andere Werkstoffe bearbeitbar sind, beispielsweise Kunststoffe, Metall oder dergleichen.

Das Arbeitswerkzeug 25 ist sozusagen an einer Längsseite der Hand-Werkzeugmaschine 20 angeordnet. Seine Flachseite 26 steht im Wesentlichen frei, so dass mit der Hand-Werkzeugmaschine 20 sozusagen randnah gesägt werden kann.

Die Hand-Werkzeugmaschine 20 ist eine elektrische Hand-Werkzeugmaschine, wobei das erfindungsgemäße Konzept auch bei Hand-Werkzeugmaschinen mit pneumatischem Antrieb, d.h. pneumatischem Antrieb für die Werkzeugaufnahme und somit das Arbeitswerkzeug, anwendbar ist.

Zur elektrischen Energieversorgung der Hand-Werkzeugmaschine 20 kann ein Netzanschlusskabel 28A vorgesehen sein (Figur 2) mit dem die Hand-Werkzeugmaschine 20 an ein Energieversorgungsnetz, beispielsweise ein Wechselstromnetz anschließbar ist. An dem Netzanschlusskabel 28A ist beispielsweise ein Netzstecker 28B zum Einstecken in eine Steckdose angeordnet. Bevorzugt ist jedoch ein mobileres oder netzungebundenes Konzept, bei dem die Hand-Werkzeugmaschine 20 bereits einen Energiespeicher 28 an Bord aufweist, beispielsweise einen Akkupack oder dergleichen.

Der Antriebsmotor 22, gegebenenfalls das Getriebe 22A, sowie das Arbeitswerkzeug 25 sind Bestandteile eines Antriebsaggregats 29 der Hand-Werkzeugmaschine 20. An diesem Antriebsaggregat 29 ist eine Schnittstelle für den Energiespeicher 28 angeordnet, d. h. der Energiespeicher 28 ist am Antriebsaggregat 29 angeordnet. Er könnte aber auch an dem nachfolgend erläuterten Führungselement 30, beispielsweise einem sogenannten Führungstisch oder einer Führungsplatte, angeordnet sein.

Das Führungselement 30 weist an seiner von dem Antriebsaggregat 29 abgewandten Seite, insbesondere Unterseite, eine Führungsfläche 31 auf, welche an einem Werkstück W entlang führbar ist, beispielsweise dessen Oberseite. Die Führungsfläche 31 ist vorliegend eine Planfläche. Bei einer erfindungsgemäßen Hand-Werkzeugmaschine kann aber auch eine nicht plane Führungsfläche, beispielsweise gebogene oder gekrümmte Führungsfläche, vorgesehen sein.

Das Führungselement 30 ist vorliegend plattenartig oder weist eine Führungsplatte auf oder ist als eine solche ausgestaltet. Beispielsweise ist das Führungselement 30 im Wesentlichen rechteckförmig. Das Führungselement 30 weist eine in Arbeitsrichtung vordere Querseite 32, eine in Arbeitsrichtung hintere Querseite 33 sowie sich zwischen diesen Querseiten 32, 33 erstreckenden Längsseiten 34 und 35 auf. Das Arbeitswerkzeug 25 ist im Bereich der in Arbeitsrichtung rechten Längsseite 35 angeordnet und steht in mindestens einer Tiefeneinstellposition, die zu einer Werkstückbearbeitung des Werkstücks W geeignet ist, vor die Führungsfläche 31 nach unten vor.

Das Antriebsaggregat 29 ist anhand einer Lageranordnung 40 relativ zu dem Führungselement 30 verstellbar gelagert. Somit ist auch die Werkzeugaufnahme 24, gegebenenfalls das Arbeitswerkzeug 25, anhand der Lageranordnung 40 bezüglich des Führungselements 30 verstellbar gelagert, beispielsweise verschwenkbar, verschieblich oder beides.

An dieser Stelle sei bemerkt, dass der Antriebsmotor 22, gegebenenfalls ein Getriebe, Bestandteile des Antriebsaggregats 29 sind, welche als Ganzes anhand der Lageranordnung 40 bezüglich des Führungselements 30 verstellbar gelagert ist. Wenn der Antriebsmotor 22 jedoch am Führungselement 30 ortsfest angeordnet wäre, könnte anhand einer Kraftübertragungseinrichtung, beispielsweise einer biegsamen Welle, die Kraft des Antriebsmotors 22 auf die Werkzeugaufnahme 24 übertragen werden.

Die Lageranordnung 40 umfasst ein Tiefeneinstelllager 36, mit dem die Werkzeugaufnahme 24 zwischen mindestens zwei tiefen Einstellpositionen bezüglich der Führungsfläche 31 verstellbar gelagert ist. Vorliegend umfasst das Tiefeneinstelllager 36 ein beispielsweise in Arbeitsrichtung vorderes oder in Arbeitsrichtung hinteres Schwenklager. Beispielsweise ist die Hand-Werkzeugmaschine 20 in der Art einer Tauchsäge ausgestaltet. Bei einer Verstellung der Werkzeugaufnahme 24, in dem das Antriebsaggregat 29 um eine Tiefeneinstellachse T des Tiefeneinstelllagers 36 geschwenkt wird, kann die Werkzeugaufnahme 24 beispielsweise aus einer oberen Tiefeneinstellposition bei der das Arbeitswerkzeug 25 nicht vor die Führungsfläche 31 vorsteht, und mindestens einer unteren Tiefeneinstellposition, vorzugsweise mehreren unteren Tiefeneinstellpositionen, verstellbar sein, in denen das Arbeitswerkzeug 25 vor die Führungsfläche 31 vorsteht, um das Werkstück W zu bearbeiten. Anstelle eines Schwenklagers könnte aber auch ein Schiebelager oder eine Schiebelageranordnung zur Bereitstellung des Tiefeneinstelllagers 36 vorgesehen sein.

Weiterhin ist es möglich, die Werkzeugaufnahme 24 und somit das gegebenenfalls an der Werkzeugaufnahme 24 befindliche Arbeitswerkzeug 25 um eine Gehrungsachse G, die sich parallel zur Arbeitsrichtung AR und/oder parallel zur Längsseite 35 des Führungselements 30 erstreckt, zu schwenken. Somit sind schräge Schnitte in das Werkstück B ohne weiteres möglich. Das Gehrungslager 37 umfasst beispielsweise zwei Teil-Gehrungslager 37A, 37B, welche in Arbeitsrichtung AR vor und hinter der Werkzeugaufnahme 24, insbesondere dem Arbeitswerkzeug 25, angeordnet sind. Das Tiefeneinstelllager 36 und das Gehrungslager 37 sind vorliegend von Hand zu bedienen. Beispielsweise umfassen sie in an sich bekannter Weise Fixierelemente, die gelöst werden, um das Antriebsaggregat 29 bezüglich der Tiefeneinstellachse T und/oder der Gehrungsachse G relativ zum Führungselement 30 zu verstellen.

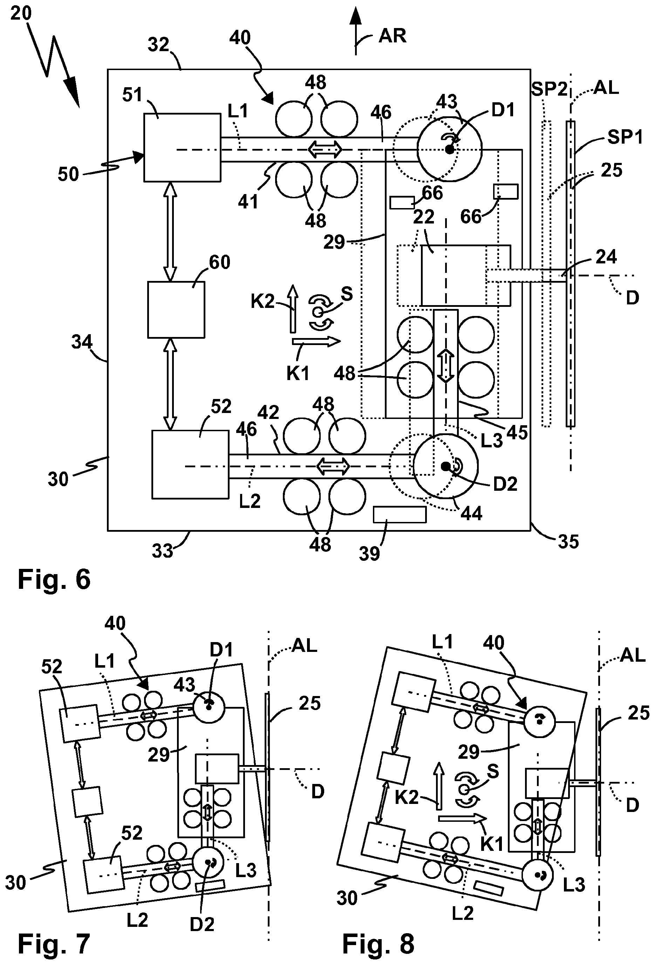

Die Lageranordnung 40 umfasst jedoch weiterhin Lager, die nicht von Hand zu verstellen sind, sondern motorisch. Dabei sind verschiedene Lagerkonzepte in den Figuren 6 bis 12 dargestellt, die nachfolgend exemplarisch erläutert werden:

Eine Lageranordnung 40 des Ausführungsbeispiels gemäß Figuren 6, 7 und 8 umfasst beispielsweise Linearlager 41, 42, die in Arbeitsrichtung AR vor und hinter der Werkzeugaufnahme 24 angeordnet sind. Die Linearlager 41, 42 sind anhand von Schwenklagern 43, 44 mit dem Antriebsaggregat 29 gekoppelt. Das Drehlager 43 ist direkt mit dem Antriebsaggregat 29 gekoppelt, beispielsweise mit dem Maschinengehäuse 21. Das Drehlager 44 hingegen ist anhand eines weiteren Linearlagers 45 mit dem Antriebsaggregat 29 gekoppelt. Die Drehlager 43, 44 weisen Drehachsen D1 und D2 auf.

Die Linearlager 41, 42 weisen jeweils ein Lagerglied 46 auf, welches an einer Lageraufnahme 47 linear beweglich gelagert ist, beim Linearlager 41 entlang einer Stellachse L1, beim Linearlager 42 entlang einer Stellachse L2.

Die Lageraufnahmen 47 umfassen drehbare Lagerböcke oder Rollen 48, zwischen denen die stangenförmigen oder stabförmigen Lagerglieder 46 aufgenommen sind. Selbstverständlich könnten auch eine Führungsnut, eine Schiebeaufnahme oder dergleichen linear lagernde Kontur als Lageraufnahme 47 vorgesehen sein. Die Zeichnung ist hier exemplarisch zu verstehen.

Das Lagerglied 46 des Linearlagers 42 ist anhand des Drehlagers 44 mit einem Lagerglied 46 des Linearlagers 45 drehbar gekoppelt. Das Drehlager 44 ist an den jeweiligen Längsendbereichen bzw. freien Endbereichen der Lagerglieder 46 der Linearlager 42, 45 vorgesehen und koppelt die Lagerglieder 46 schwenkbeweglich.

Das Linearlager 45 lagert sein Lagerglied 46 entlang einer Stellachse L3 schiebebeweglich. Die Lagerachse L3 ist im Wesentlichen parallel zur der Arbeitsrichtung AR, kann aber ihre Ausrichtung bzw. Winkellage bezüglich der Arbeitsrichtung AR ändern, was nachfolgend deutlicher wird.

Eine Relativposition der Werkzeugaufnahme 24 relativ zum Führungselement 30 ist anhand der Lageranordnung 40 sowohl um eine Stellschwenkachse S, als auch quer dazu, nämlich mit einer Bewegungskomponente K1, die im Wesentlichen parallel zur Drehachse D der Werkzeugaufnahme 24 und/oder quer zur Arbeitsrichtung AR verläuft, sowie vorteilhaft mit einer Bewegungsrichtungskomponente K2 verstellbar, die längs der Arbeitsrichtung AR und/oder rechtwinkelig zur Drehachse D der Werkzeugaufnahme 24 ausgerichtet ist. Die Stellschwenkachse S durchsetzt die Führungsfläche 31 winkelig, insbesondere orthogonal.

Grundsätzlich ist die Lageranordnung 40 so ausgestaltet, dass eine Steuerungseinrichtung 60 eine Stellmotoranordnung 50 mit Stellmotoren 51, 52 derart ansteuern kann, dass die Werkezugaufnahme 24 und mithin das Arbeitswerkzeug 25 ihre Ausrichtung relativ zur Arbeitsrichtung AR und/oder bezüglich einer Soll-Arbeitslinie AL, entlang derer das Arbeitswerkzeug 25 in Eingriff mit dem Werkstück W kommen soll, beispielsweise um einen Sägeschnitt einzubringen, beibehält.

Die Stellmotoren 51, 52 sind den Linearlagern 41, 42 zugeordnet. Beispielsweise treiben die Stellmotoren 51, 52 die Lagerglieder 46 der Linearlager 41, 42 an. Es ist möglich, dass die Lagerglieder 46 beispielsweise von Abtrieben der Stellmotoren 51, 52 gebildet sind. Mithin ist es also möglich, dass die Linearlager 41, 42 Bestandteile der Stellmotoren 51, 52 sind.

Wenn die Steuerungseinrichtung 60 die Stellmotoren 51, 52 zu einem simultanen und gleich schnellen Vortrieb der Lagerglieder 46 der Linearlager 41, 42 ansteuert, bleibt eine Winkelposition der Werkezugaufnahme 24 bezüglich der Stellschwenkachse S erhalten. Dadurch wird beispielsweise das Arbeitswerkzeug 25 parallel zwischen einer in Figur 6 in durchgezogenen Linien dargestellten Stellposition SP1 und einer in Figur 6 in gestrichelten Linien dargestellten Stellposition SP2 verstellt. Selbstverständlich ist eine derartige Parallelverstellung nicht nur dann möglich, wenn die Längsseite 35 des Führungselements 30 parallel zur Arbeitslinie AL verläuft, sondern auch in den Figuren 7 und 8 dargestellten Schwenkstellungen des Führungselements 30 bezüglich der Drehachse D und/oder der Flachseite 26 des Arbeitswerkzeugs 25.

Die Stellmotoranordnung 50 kann aber von der Steuerungseinrichtung 60 auch so angesteuert werden, dass die Drehachse D ihre Schwenkstellung bezüglich der Stellschwenkachse S verändert, insbesondere um die Ausrichtung des Arbeitswerkzeugs 25 und/oder der Werkzeugaufnahme 24 bezüglich der Soll-Arbeitslinie AL beizubehalten, was in den Figuren 7 und 8 deutlich wird. Dabei ändert sich beispielsweise die Winkellage der Stellachsen L1, L2 bezüglich der Stellschwenkachse S, die die Führungsebene oder Führungsfläche 31 rechtwinkelig durchsetzt. An dieser Stelle sei bemerkt, dass die Stellschwenkachse S bezüglich des Führungselements 30 nicht ortsfest ist, sondern innerhalb der Führungsfläche 31 beispielsweise mit der Bewegungskomponente K1 verstellt wird, wenn die Stellmotoren 51, 52 das Arbeitswerkzeug 25 bzw. die Werkzeugaufnahme 24 zwischen den beiden exemplarisch dargestellten Positionen parallel versetzen oder verstellen.

In den Figuren 7 und 8 sind die Stellachsen L1, L2 um die Stellschwenkachse S im Gegenuhrzeigersinn (Figur 7) bzw. im Uhrzeigersinn (Figur 8) verstellt. Die Stellachse L3 des Linearlagers 46 behält ihre parallele Lage bezüglich der Flachseite 26 bzw. ihre rechtwinkelige Lage bezüglich der Drehachse D der Werkzeugaufnahme 24 bei.

Diese Maßnahmen sind insbesondere deshalb wesentlich, weil ein Bediener sozusagen den Vorschub der Hand-Werkzeugmaschine 20 bezüglich des Werkstücks W leistet, diese also entlang der Soll-Arbeitslinie vorschiebt oder zurückzieht, wobei er möglicherweise die Winkelposition des Führungselements 30 bezüglich der Soll-Arbeitslinie AL nicht beibehalten kann, wenn er das Führungselement 30 in Arbeitsrichtung AR oder zumindest mit einer Richtungskomponente bezüglich der Arbeitsrichtung AR bezüglich des Werkstücks W verstellt, beispielsweise vorschiebt oder zurückzieht. Dazu kann der Bediener beispielsweise die Hand-Werkzeugmaschine anhand einer Betätigungshabe 39, insbesondere eines Handgriff, ergreifen. Die Betätigungshandhabe 39 ist vorzugsweise am Führungselement 30, insbesondere an deren in Arbeitsrichtung AR hinterem Bereich angeordnet, beispielsweise an oder nahe bei der Querseite 33.

Aufgrund von Ungenauigkeiten bei der Handhabung verstellt also der Bediener beim Vorschieben oder Verstellen der Hand-Werkzeugmaschine 20 mit einer Richtungskomponente parallel zur Soll-Arbeitslinie AL die Relativposition des Führungselements 30 nicht nur idealerweise exakt längs der Soll-Arbeitslinie AL, sondern unabsichtlich in Winkeln dazu, was in den Figuren 7 und 8 dargestellt ist. Dennoch behält die Steuerungseinrichtung 60 das Arbeitswerkzeug 25 sozusagen auf Kurs, d.h. dass es seine Ausrichtung bezüglich der Soll-Arbeitslinie AL nicht verlässt, sondern durch den Bediener allenfalls mit einer Bewegungsrichtungskomponente entlang der Arbeitsrichtung AR verstellbar ist.

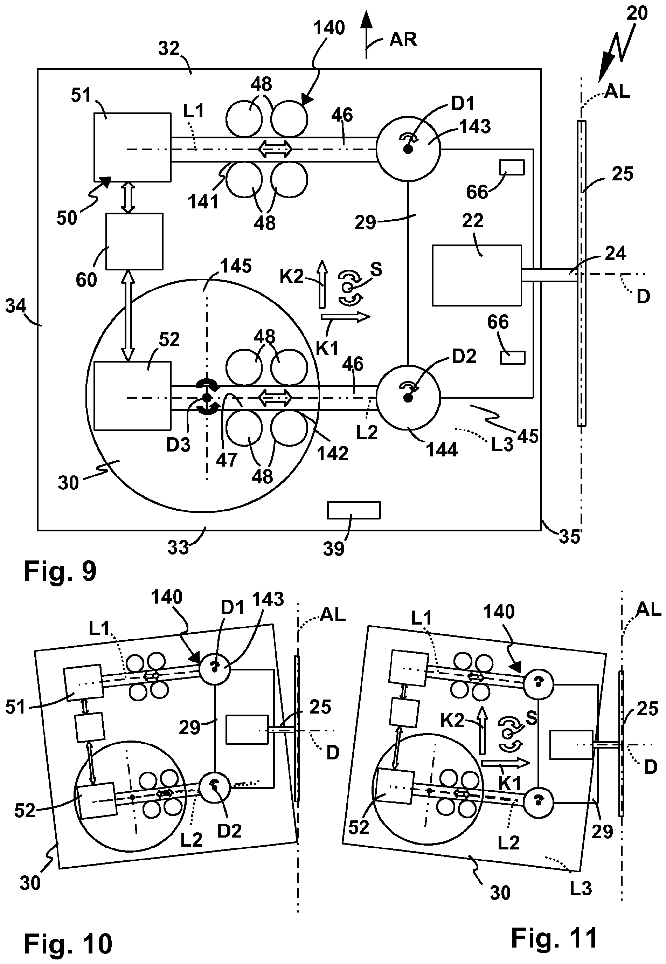

Ein alternatives Lagerkonzept ist bei einer Lageranordnung 140 gemäß Figuren 9 bis 11 realisiert. Von der Lageranordnung 40 bekannte, gleiche oder gleichartige Komponenten sind bei der Lageranordnung 140 mit denselben oder ähnlichen Bezugsziffern versehen.

Die Lageranordnung 140 umfasst ein in Arbeitsrichtung AR vorderes Linearlager 141 und ein in Arbeitsrichtung AR hinteres Linearlager 141, 142, deren Stellachsen L1 und L2 quer, in vorzugsweise mindestens einer Position etwa rechtwinkelig quer, zur Arbeitsrichtung AR verlaufen.

Das Linearlager 141 entspricht dem Linearlager 41 und ist mit einem eine Drehachse D1 aufweisenden Drehlager 43 mit dem Antriebsaggregat 29 und somit mit der Werkzeugaufnahme 24 schwenkbeweglich gekoppelt.

Das Linearlager 142 hingegen ist über ein Drehlager 144 mit dem Antriebsaggregat 29 und somit der Werkzeugaufnahme 24 drehgekoppelt. Das Drehlager 144 ist am freien Endbereich des Lagerglieds des Linearlagers 42 angeordnet und verbindet diesen schwenkbeweglich oder drehbeweglich mit dem Antriebsaggregat 29. das Drehlager 144 weist eine Drehachse D2 auf.

Allerdings ist eine Lageraufnahme 47 des Linearlagers 142 nicht ortsfest am Führungselement 30 angeordnet, wie das beim Linearlager 42 der Fall ist, sondern schwenkbeweglich anhand eines Drehlagers 145. Das Drehlager 145 lagert sowohl die Lageraufnahme 47 als auch den Stellmotor 52, der zum Antreiben des Lagerglieds 46 des Linearlagers 142 vorgesehen ist, schwenkbeweglich um eine Schwenkachse oder Drehachse D3, die die Führungsfläche 31 oder Führungsebene orthogonal durchsetzt. An dieser Stelle sei bemerkt, dass auch die Drehachsen D1, D2 oder Schwenkachsen der Drehlager 43, 44, 144 sowie 145 die Führungsfläche oder Führungsebene 31 orthogonal durchsetzen.

Die Drehlager 143, 144 weisen Drehachsen D1 und D2 ähnlich wie die Drehlager 42, 44 auf, die die Führungsfläche 31 senkrecht oder etwa senkrecht durchsetzen.

Die Lageranordnung 40 umfasst also zwei Drehlager und drei Linearlager. Die Lageranordnung 140 hingegen umfasst lediglich zwei Linearlager, jedoch drei Drehlager. In beiden Fällen ist eine Parallelverstellung der Werkzeugaufnahme 24 bezüglich der Stellschwenkachse S möglich. Die Drehlager 43, 44 weisen Lagerachsen D1 und D2 auf, die die Führungsebene oder die Führungsfläche 31 senkrecht oder etwa senkrecht durchdringen.

Man erkennt in den Figuren 9, 10 und 11, dass auch bei der Lageranordnung 140 die Steuerungseinrichtung 60 ohne weiteres in der Lage ist, eine Schwenkstellung der Werkzeugaufnahme 24 und des Arbeitswerkzeugs 25 bezüglich des Führungselements 30 beizubehalten, wenn sie das Führungselement 30 und die Werkzeugaufnahme 24 mit einer oder beiden der Bewegungsrichtungskomponenten K1 und/oder K2 relativ zueinander verstellt, insbesondere das Führungselement 30 relativ zur Werkzeugaufnahme 24 verstellt. Das Arbeitswerkzeug 25 bleibt in Bezug auf die Soll-Arbeitslinie AL stets optimal ausgerichtet, so dass es sich beispielsweise in einer Schnittfuge, die in das Werkstück W eingesägt ist, nicht verkantet.

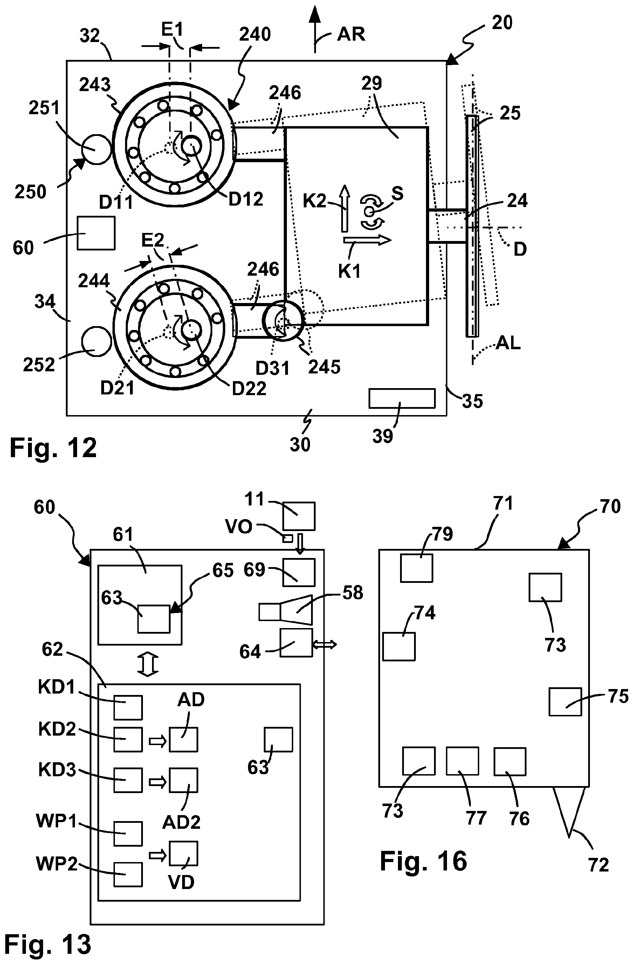

Ein weiteres Lagerkonzept ist in Fig. 12 dargestellt, nämlich anhand einer Lageranordnung 240. Bei der Lageranordnung 240 sind drei Drehlager 243, 244 sowie 245 vorgesehen. Die Drehlager 243, 244 sind in Bezug auf die Arbeitsrichtung AR vor und hinter dem Antriebsaggregat 29 und/oder der Werkzeugaufnahme 24 angeordnet.

Das Antriebsaggregat 29 ist mit den Drehlagern 243, 244 exzentrisch verbunden, nämlich anhand von Verbindungsgliedern 246, deren Anlenkungsorte D12 und D22 bezüglich der Drehlager 243, 244 Exzentritäten E1 und E2 bezüglich der Drehachsen D11 und D21 der Drehlager 243, 244 aufweisen.

Das Verbindungsglied 246 zwischen einem der Drehlager 243 oder 244, beim Ausführungsbeispiel des Drehlagers 243 bzw. des in Arbeitsrichtung vorderen Drehlagers, ist fest mit dem Antriebsaggregat 29 bzw. der Werkzeugaufnahme 24 verbunden, so dass diese mit der Exzentrizität E1 um die Drehachse D1 schwenkt. Das andere Verbindungsglied 246 hingegen ist drehbeweglich mit dem Antriebsaggregat 29 und somit der Werkzeugaufnahme 24 gekoppelt, nämlich anhand eines Drehlagers oder Schwenklagers 245. Das Drehlager 245 hat eine Drehachse D31.

Die Drehlager 243, 244 sind durch eine Stellmotoranordnung 250 angetrieben. Beispielsweise umfasst die Stellmotoranordnung 250 als Drehmotoren oder Drehantriebe ausgestaltete Stellantriebe oder Stellmotoren 251, 252, mit denen die Drehlagerglieder und somit die Verbindungsglieder 246 dreh- oder schwenk-angetrieben oder antreibbar sind. Die Stellantriebe 251, 252 werden in bereits erläuterter Weise vorteilhaft durch die Steuerungseinrichtung 60 angesteuert, beispielsweise drahtlos oder drahtgebunden.

Auch die Lageranordnung 240 ermöglicht es, dass die Steuerungseinrichtung 60 durch geeignete Ansteuerung der Stellantriebe 251, 252 das Arbeitswerkzeug 25 um die Stellschwenkachse S zu schwenken, aber auch unter Beibehaltung einer jeweiligen Schwenklage oder Schwenkstellung bezüglich der Stellschwenkachse S mit den Bewegungsrichtungskomponenten K1 und vorzugsweise auch K2 relativ zum Führungselement 30 zu verstellen. In der zeichnerischen Darstellung der Figur 12 ist zwar dargestellt, dass das Arbeitswerkzeug 25 um die Stellschwenkachse S verschwenkt ist. Man erkennt aber, dass das Führungselement 30 durch diese Verstellung seine Relativposition bezüglich der Drehachse D bzw. der Werkzeugaufnahme 24 verändert. Dies dient dazu, dass das Arbeitswerkzeug 25 mit der Soll-Arbeitslinie AL fluchtend gehalten wird, wenn das Führungselement 30 vom Bediener relativ zur der Soll-Arbeitslinie AL verschwenkt wird.

Die bei der Hand-Werkzeugmaschine 20 vorgesehene Verstellkinematik mit der Stellmotoranordnung 50 und der Lageranordnung 40 sowie den alternativen Lageranordnungen 140, 240 und der alternativen Stellmotoranordnung 250 eignen sich für eine teilautomatisierte Werkstückbearbeitung, insbesondere einen teilautomatischen Sägebetrieb, bei dem der Bediener die Hand-Werkzeugmaschine 20 lediglich in der Arbeitsrichtung AR oder entgegen der Arbeitsrichtung AR an dem Werkstück W entlang führt, um beispielsweise einen Sägeschnitt entlang der Soll-Arbeitslinie AL durchzuführen. Sowohl für diesen weitgehend automatisierten Sägebetrieb oder die weitgehend automatisierte Werkstückbearbeitung als auch für eine Werkstückbearbeitung, bei der die Hand-Werkzeugmaschine 20 ohne die Mitwirkung der Stellmotoranordnung 50, 250 oder das Vorhandensein derselben betrieben wird, nämlich indem der Bediener die Hand-Werkzeugmaschine 20 manuell entlang der Soll-Arbeitslinie AL führt, eignet sich die nachfolgend beschriebenen Verfahren, bei denen die Festlegung der Soll-Arbeitslinie AL, wesentlich erleichtert ist.

Das Werkstück W ist beispielsweise in einem Arbeitsraum R angeordnet, siehe Figur 1. Das Werkstück W soll entlang der Soll-Arbeitslinie AL bearbeitet werden, beispielsweise soll ein Werkstückteil W1 von einem Werkstückteil W2 abgetrennt werden. Um einen geraden Sägeschnitt durchzuführen, würde man gemäß dem Stand der Technik auf einer oberen Werkstück-Flachseite WO ein Führungslineal oder eine Führungsschiene auflegen, entlang derer die Hand-Werkzeugmaschine 20 zu führen ist. Das ist mit der Hand-Werkzeugmaschine 20, beispielsweise anhand von an der Führungsfläche 31 vorhandenen, nicht näher erläuterten Führungskonturen zum Eingriff in die ebenfalls nicht dargestellte Führungsschiene, ohne weiteres möglich, jedoch bei dem nachfolgend erläuterten Prinzip nicht unbedingt erforderlich.

Zur Ermittlung der Soll-Arbeitslinie AL genügen beispielsweise Werkstückmarkierungen M1 und M2, die einen Abstand zueinander aufweisen und zwischen denen sich die Soll-Arbeitslinie AL, vorliegend eine gerade Linie, erstrecken soll. Beispielsweise sind als Werkstückmarkierungen M1 und M2 Strich-Markierungen oder Punkt-Markierungen an der oberen Flachseite WO vorgesehen. Mit seiner Unterseite, der unteren Flachseite WO liegt das Werkstück beispielsweise auf einem Untergrund, insbesondere auf einem Arbeitstisch, Lagerböcken oder dergleichen, auf. Die Arbeitslinie AL soll von einer Werkstück-Stirnseite WS ausgehend bis zu gegenüberliegenden Werkstück-Stirnseite zwischen den Werkstück-Längsseiten WLR und WLL durchgeführt werden.

Der Bediener braucht jedoch keine Verbindungslinie zwischen den Werkstückmarkierungen M1 und M2 einzuzeichnen, um die gerade Soll-Arbeitslinie AL sozusagen aufzufinden oder optisch nachzuführen, sondern benutzt die nachfolgend erläuterte Markierungserfassungseinrichtung 70. Die Markierungserfassungseinrichtung umfasst einen Markierungsaufnehmer 71, der stiftartig ausgestaltet ist. Der Bediener kann den Markierungsaufnehmer 71 beispielsweise von Hand ergreifen, was mit einer schematisch dargestellten Hand H eines Bedieners in Figur 1 angedeutet ist.

Der Markierungsaufnehmer 71 weist eine mechanische Referenz 72 in Gestalt seiner Spitze oder seines Längsendbereiches auf, die der Bediener sequenziell in Koinzidenz mit der Werkstückmarkierung M1 und der Werkstückmarkierung M2 bringt, indem er die Referenz 72 an oder auf der jeweiligen Werkstückmarkierung M1, M2 positioniert.

Die Markierungserfassungseinrichtung 70 erfasst die jeweilige Position der Werkstückmarkierung M1, M2, nämlich deren Koordinatendaten KD1 und KD2, in Bezug auf ein zumindest zweidimensionales Koordinatensystem KR2, welches in dem Arbeitsraum R aufgespannt ist. Das Koordinatensystem KR2 kann sich beispielsweise parallel zur Werkstück-Flachseite WO erstrecken. Die Koordinatendaten KD1 und KD2 enthalten beispielsweise jeweils einen Wert bezüglich der Koordinatenachsen kx, ky des Koordinatensystems KR2, optional einen Wert bezüglich einer Koordinatenachse kz eines Koordinatensystems KR3. Das Koordinatensystem KR3 ist ein dreidimensionales Koordinatensystem.

Die Koordinatensysteme KR2 und KR3 sind beispielsweise bezüglich des Arbeitsraums AR ortsfest. Die Koordinatensysteme KR2 und KR3 können aber auch bei einem anderen Ausführungsbeispiel bezüglich des Werkstücks W ortsfest sein.

Bevorzugt ist jedoch eine dreidimensionale Koordinatenerfassung, d.h. dass die Markierungserfassungseinrichtung 70 die Koordinatendaten KD1 und KD2 als dreidimensionale Koordinatendaten erfasst.

Das zweidimensionale Koordinatendatensystem K2 umfasst beispielsweise Koordinatenachsen kx und ky, das dreidimensionale Koordinatensystem KR3 zusätzlich noch eine Koordinatenachse kz. Die Koordinatenachsen kx, ky und kz sind vorzugsweise rechtwinkelig zueinander. Beispielsweise erstrecken sich die Koordinatenachsen kx und ky parallel zur Flachseite WO des Werkstücks W, während die Koordinatenachse kz rechtwinkelig dazu ist, sozusagen eine Normale durch die Flachseite WO herstellt.

Selbstverständlich können die Koordinatensysteme KR2 und KR3 auch anderweitig bezüglich des Arbeitsraums R orientiert sein. Beim in der Zeichnung dargestellten Ausführungsbeispiel ist jedoch die erläuterte Orientierung des Koordinatensystems KR2 oder KR3 vorteilhaft, indem z.B. Koordinatengeber 80, 81 direkt auf der Flachseite WO aufgestellt werden können, so dass die Koordinatengeber 80, 81 in Bezug auf die Koordinatenachse kz dieselbe Position haben.

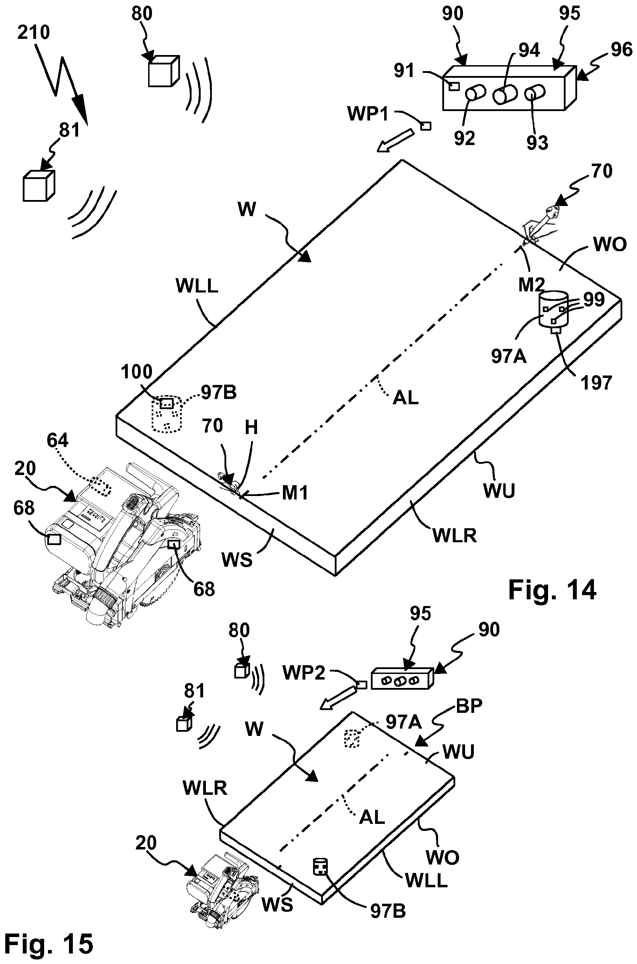

Selbstverständlich können die Koordinatengeber 80, 81 auch beliebig anderweitig im Arbeitsraum R positioniert werden, wie in Figur 14, 15 der Fall. Insbesondere in diesem Fall, aber auch bei der Positionierung auf der Werkstück-Flachseite WO, ist es vorteilhaft, wenn mindestens einer der Koordinatengeber 80, 81 zur Bereitstellung des dreidimensionalen Koordinatensystems KR3 ausgestaltet und/oder nutzbar ist.

Die Koordinatengeber 80, 81 können beispielsweise auf ihren Unterseiten, an denen Stellflächen 82 vorgesehen sind, auf der Werkstück-Flachseite WO abgestellt werden. Somit ist eine Position eines Koordinatensenders 84, welcher in einem Gehäuse 85 der Koordinatengeber 80, 81 angeordnet ist, relativ am Gehäuse 85 vorgesehenen Stellfläche 82 vorbekannt, so dass an sich die Koordinatenachse kz nicht wesentlich sein muss, jedoch durchaus in den nachfolgenden Betrachtungen einfließen kann.

An der Stellfläche 82 oder zusätzlich zu derselben können Befestigungsmittel 83, z.B. Haft-Befestigungsmittel 83A, beispielsweise eine Gummibeschichtung, und/oder Saug-Befestigungsmittel 86, beispielsweise ein Saugkopf oder dergleichen vorgesehen sein, um den Halt des jeweiligen Koordinatengebers 80, 81 am Werkstück W zu verbessern, wenn wie nachfolgend erläutert die Koordinatendaten KD1, KD2 ermittelt werden. Ein Koordinatensender 84 des Koordinatengebers 80, 81 sendet Referenzinformationen RX und RY, beispielsweise ein Muster von Linien, die winkelig, beispielsweise rechtwinkelig zueinander sind. Es ist möglich, dass der Koordinatensender 84 sequentiell oder gleichzeitig das jeweilige Linienmuster bzw. die Referenzinformation RX und RY sendet. Die Referenzinformationen RX und RY eignen sich für eine dreidimensionale Erfassung der Koordinatendaten KD1, KD2, d.h. in Bezug auf das dreidimensionale Koordinatensystem KR3. Es ist aber auch möglich, dass der Koordinatensender 84 beispielsweise nur die Referenzinformationen RX sendet, die eine zweidimensionale Orientierung bezüglich des zweidimensionalen Koordinatensystems KR2 ermöglichen. Die Referenzinformationen RX umfassen beispielsweise Linien, die sich parallel zur Koordinatenachse kz erstrecken und nebeneinander in Bezug auf die Koordinatenachsen kx und/oder ky angeordnet sind. Beispielsweise sendet der Koordinatensender 84 die Linien der Referenzinformation RX und/oder RY sequentiell oder gleichzeitig.

Die Koordinatengeber 80, 81 sind in einem Abstand am Werkstück W angeordnet. Dadurch ist es sogar möglich, dass die Markierungserfassungseinrichtung 70 anhand einer Triangulation ihre jeweilige Position im Koordinatensystem KR2 und/oder KR3 ermittelt. Anhand jedoch der räumlich beabstandeten Referenzinformationen RX und RY reicht es aus, wenn einer der Koordinatengeber 80 oder 81 vorhanden ist.

Bei den Referenzinformationen RX und RY handelt es sich beispielsweise um Lichtsignale, Mikrowellen oder dergleichen andere berührungslos übertragbare Referenzinformationen. Die Lichtsignale können auch im nicht sichtbaren Bereich sein, beispielsweise dem Infrarotbereich oder dem ultravioletten Bereich. Jedenfalls kann die Markierungserfassungseinrichtung 70 anhand des mindestens einen Koordinatengebers 80 und/oder 81 ihre jeweilige Position bezüglich des Koordinatensystems KR2, KR3 sozusagen orten und/oder ermitteln, um die Koordinatendaten KD1 und KD2 zu erfassen.

An der Markierungserfassungseinrichtung 70 ist mindestens ein Sensor 73, vorzugsweise eine Anordnung mehrerer Sensoren 73, angeordnet.

Die Sensoren 73 sind beispielsweise an einem von der Referenz 72 entfernten Längsendbereich des Markierungsaufnehmers 71 angeordnet.

Die Sensoren 73 weisen zweckmäßigerweise einen Abstand zueinander auf, so dass jeweils mindestens einer der Sensoren 73 die Referenzinformationen RX und/oder RY empfangen kann. Die Anordnung der Sensoren 73 in einem Abstand zueinander an dem Markierungsaufnehmer 71 ermöglicht zudem eine Triangulation oder anderweitig andere räumliche Bestimmung der Koordinaten KD1, KD2 auch dann, wenn nur einer der Koordinatengeber 80, 81 vorhanden ist.

Die Markierungserfassungseinrichtung 70 weist zweckmäßigerweise einen Neigungssensor 79 auf, um die örtliche Relation der Referenz 71 zu dem mindestens einen Sensor 73 zur Bereitstellung der Koordinatendaten KD1, KD2 zu ermitteln.

Die Markierungserfassungseinrichtung 70 kann die Koordinatendaten KD1, KD2 in Abhängigkeit von mindestens einer Auslösebedingung erfassen. So kann beispielsweise ein Markierungsaufnehmer 71 ein Schalter 75, insbesondere ein elektrischer Druckschalter, ein elektrischer Schalter, vorzugsweise ein Druckschalter oder dergleichen vorgesehen sein. Als Schalter 75 eignet sich auch ein kapazitiver oder sonstiger manuell betätigbarer Sensor. Wenn der Bediener den Schalter 75 betätigt, nimmt die Markierungserfassungseinrichtung 70 die Position der jeweiligen Referenz 72 auf und ermittelt auf diesem Wege die Koordinatendaten KD1 und/oder KD2.

Alternativ oder ergänzend dazu eignet sich als Auslösebedingung auch eine zeitliche Bedingung. Wenn der Bediener beispielsweise die Referenz 72 für eine vorbestimmte Zeitspanne, beispielsweise 10 Sekunden oder länger, an der Referenz 72 hält, wird dies als eine Auslösebedingung zur Erfassung der Koordinatendaten KD1 oder KD2 von der Markierungserfassungseinrichtung 70 interpretiert. Um eine vorbestimmte Verweildauer der Referenz 72 an einer der Werkstückmarkierung M1 oder M2 zu ermitteln, weist die Markierungserfassungseinrichtung 70 beispielsweise einen Bewegungssensor 77 auf.

Es ist auch möglich, dass die Markierungserfassungseinrichtung aufgrund einer Abstandsmessung, nämlich beispielsweise anhand eines Abstandssensors 76, beispielsweise eines optischen Sensors, die Koinzidenz bzw. die räumliche Anordnung der Referenz 72 an der Werkstückmarkierung M1 oder M2 ermittelt. Beispielsweise handelt es sich bei der Werkstückmarkierung M1 oder M2 im Vergleich zur Werkstück-Oberfläche an der Flachseite WO um eine einen Kontrast aufweisende Werkstückmarkierung, die auf optischem Wege erfassbar ist.

Wenn die Markierungserfassungseinrichtung 70 die Koordinatendaten KD1 und KD2 erfasst hat, kann sie diese beispielsweise anhand eines Senders 74 an die Hand-Werkzeugmaschine 20 übertragen. Eine Ausführungsform der Erfindung kann vorsehen, dass an die Hand-Werkzeugmaschine 20 eine Halteaufnahme 38, beispielsweise eine Steckaufnahme, zum Halten der Markierungserfassungseinrichtung 70 vorgesehen ist. Beispielsweise kann diese in die Halteaufnahme 38 eingesteckt werden.

Die Markierungserfassungseinrichtung 70 sendet die Koordinatendaten KD1 und KD2 anhand ihres Senders 74 drahtlos oder drahtgebunden an eine Schnittstelle der Hand-Werkzeugmaschine 20, beispielsweise eine Bluetooth-Schnittstelle, eine USB-Schnittstelle, eine I$^2$C-Schnittstelle oder dergleichen. Die Schnittstelle 64 und der Koordinatensender 84 weisen dazu beispielsweise USB-Busschnittstellen, I$^2$C-Busschnittstellen, WLAN-Schnittstellen, Bluetooth-Schnittstellen oder dergleichen auf. Die Schnittstelle 64 kann sich beispielsweise in der Halteaufnahme 38 befinden. Die Halteaufnahme 38 ist aber nicht notwendig, d.h. die Markierungserfassungseinrichtung 70 muss nicht zwingend an der Hand-Werkzeugmaschine 20 angebracht werden, um die Koordinatendaten KD1, KD2 zu übertragen.

Die Steuerungseinrichtung 60 weist einen Prozessor 61 sowie einen Speicher 62 auf. In dem Speicher 62 ist beispielsweise ein Steuerungsprogramm 63 gespeichert, welches von dem Prozessor 61 ausführbarem Programmcode enthält. Das Steuerungsprogramm 63 bildet ein Führungsmittel 65 zum Führen der Hand-Werkzeugmaschine 20 in Abhängigkeit von den Koordinatendaten KD1 und KD2 in einem Arbeitsbereich, vorliegend entlang der Soll-Arbeitslinie AL.

Das Führungsmittel 65 liest beispielsweise die Koordinatendaten KD1, KD2 ein, die jeweils Teil-Koordinaten in Bezug auf die Koordinatenachsen kx, ky und kz enthalten. Anhand an sich bekannter Verfahren aus der darstellenden Geometrie kann das Führungsmittel 65 anhand der Koordinatendaten KD1 und KD2 die Arbeitslinie AL repräsentierende Arbeitsbereichsdaten AD ermitteln, vorzugsweise im Speicher 62 abspeichern. Zur Ermittlung der Arbeitsbereichsdaten AD bildet das Führungsmittel 65 beispielsweise eine Vektor-Differenz zwischen den Koordinatendaten KD1 und KD2.

Anschließend führt das Führungsmittel 65 die Hand-Werkzeugmaschine 20 entlang der Arbeitslinie AL, wobei die Stellmotoranordnung 50 so angesteuert wird, dass das Arbeitswerkzeug 25 sich entlang der Arbeitslinie AL bewegt. Auch hierbei ist es vorteilhaft, wenn sich die Hand-Werkzeugmaschine 20, insbesondere das Führungsmittel 65 an dem Koordinatensystem KR2 oder KR3 orientiert, wofür die Koordinatengeber 80 und/oder 82 vorteilhaft sind. Beispielsweise sind an der Hand-Werkzeugmaschine 20 Sensoren 66, insbesondere eine Vielzahl oder mindestens zwei Sensoren 66 für den Empfang der Referenzinformationen RX und/oder RY vorgesehen. Somit kann die Hand-Werkezugmaschine stets ihre Position im Arbeitsraum R, insbesondere in Bezug auf die Soll-Arbeitslinie AL ermitteln.

Die Sensoren 66 bilden Bestandteile eines Orientierungsmittels 67 der Hand-Werkzeugmaschine 20 zur Orientierung im Arbeitsraum R und/oder bezüglich des Koordinatensystems KR2 und/oder KR3.

Die Markierungserfassungseinrichtung 70 weist in Gestalt der Sensoren 67 Orientierungsmittel 78 auf, mit denen sie sich bezüglich des Koordinatensystems KR2, KR3 orientieren kann.

Das Führungsmittel 65 ermittelt für die Soll-Arbeitslinie AL Arbeitsbereichsdaten AD, beispielsweise einen Anfangspunkt für die Gerade, die die Arbeitslinie AL repräsentiert sowie den weiteren Verlauf bezüglich der Koordinatenachsen kx und ky, optional kz.

Selbstverständlich ist aber auch anstelle des linearen Arbeitsbereichs ein zweidimensionaler oder flächiger Arbeitsbereich, beispielsweise für eine Fräsbearbeitung des Werkstücks W, auf dem vorgenannten Wege ermittelbar. So könnte beispielsweise eine weitere Werkstückmarkierung M3 durch die Markierungserfassungseinrichtung 70 erfasst werden. Die Werkstückmarkierungen M1, M2 und M3 sind beispielsweise an Eckpunkten eines Dreiecks vorgesehen, dessen Fläche durch eine erfindungsgemäße Hand-Werkzeugmaschine geschliffen oder gefräst werden soll. Die Markierungserfassungseinrichtung 70 ermittelt in der oben beschriebenen Weise beispielsweise die Koordinatendaten KD1, KD2, KD3 der Werkstückmarkierungen im M1, M2 und M3 und übermittelt diese oder bereits den Arbeitsbereich AB definierende Arbeitsbereichsdaten AD2, der sich in der durch die Werkstückmarkierungen M1, M2 und M3 definierten Fläche befindet, der Hand-Werkzeugmaschine 20. Es ist auch möglich, dass die Steuerungseinrichtung 60 selbst die den Arbeitsbereich AB definierenden Arbeitsbereichsdaten AD2 ermittelt, zum Beispiel anhand des Steuerungsprogramms 63.

Schließlich müssen die Arbeitsbereichsdaten AD nicht unbedingt eine gerade Linie repräsentieren. So ist insbesondere bei einer Ausgestaltung einer erfindungsgemäßen Hand-Werkzeugmaschine als Stichsäge auch ein Verlauf mit Krümmungen und Bögen möglich. So kann beispielsweise eine Soll-Arbeitslinie AL2 in dem Werkstück W zu sägen sein, die sich von der Werkstückmarkierung M1 über eine Werkstückmarkierung M4 bis zu der Werkstückmarkierung M2 erstreckt. Der Markierungsaufnehmer 71 ist an den Werkstückmarkierungen M1, M4 und M2 zu positionieren, so dass seine Referenz 72 die jeweiligen Koordinatendaten der Werkstückmarkierungen M1, M4 und M2 erfasst. Das Führungsmittel 65 und/oder die Markierungserfassungseinrichtung 70 können dann beispielsweise eine bogenförmige Linie oder eine Dreieck-Linie, die durch die Werkstückmarkierungen M1, M4 und M2 definiert ist, als Soll-Arbeitslinie AL2 zur Führung der Hand-Werkzeugmaschine 20 bereitstellen.

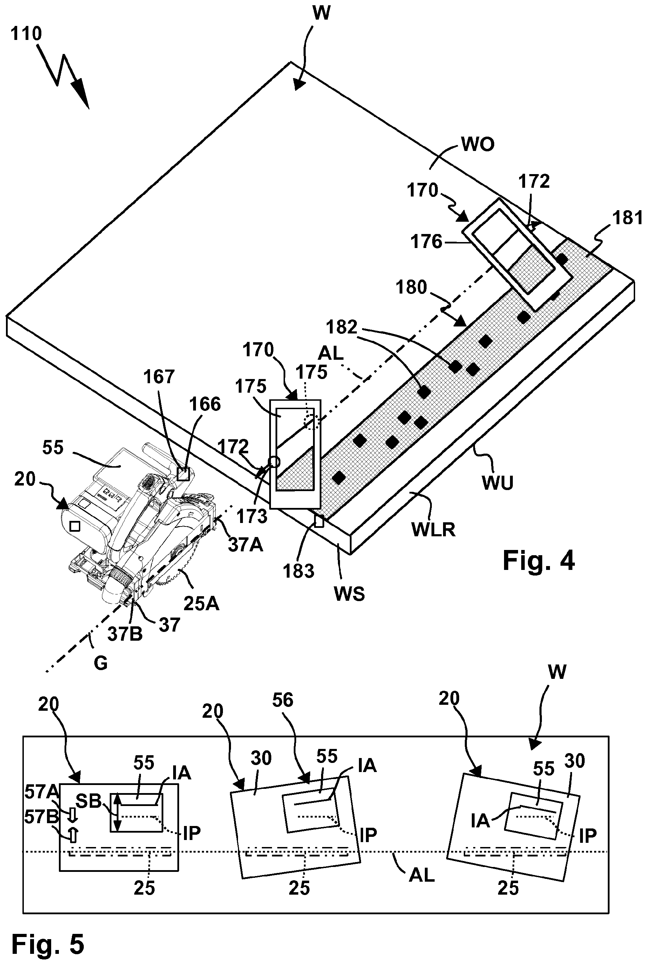

Der Bediener wird bei der Führung der Hand-Werkzeugmaschine 70 vorzugsweise durch eine optische Anzeige, insbesondere eine Anzeigeeinrichtung 55, der Hand-Werkzeugmaschine unterstützt. Diese ist schematisch in Figur 5 angedeutet. Die Anzeigeeinrichtung 55 ist beispielsweise an der Führungsfläche 31 abgewandten Seite, insbesondere Oberseite, der Hand-Werkzeugmaschine 20 angeordnet, so dass sie für den Bediener leicht einsehbar ist. Die Anzeigeeinrichtung 55 zeigt an der Anzeigeeinrichtung 55 vorzugsweise einen durch die Stellmotoranordnung 50 einstellbaren Stellbereich SB an, sozusagen einen Korridor oder ein Fenster, innerhalb dessen das Arbeitswerkzeug 25 von der Stellmotoranordnung 50 relativ zur einzuhaltenden Soll-Arbeitslinie AL verstellbar ist.

Der Bediener erhält zusätzlich noch vorteilhafte Informationen an der Anzeigeeinrichtung 55, nämlich beispielsweise eine eine Ist-Position des Arbeitswerkzeugs 25 anzeigende Ist-Anzeige IP und/oder eine eine Abweichung des Führungselements 30 von einer Ideallinie, der Soll-Arbeitslinie AL anzeigende Abweichungsanzeige IA. Die Anzeigen IA und IP sind zweckmäßigerweise linienförmig.

Man erkennt beispielsweise in Figur 5, dass in der linken Position der Hand-Werkzeugmaschine 20 bezüglich des Werkstücks W die Anzeigen IA und IP zwar parallel zueinander sind, jedoch einen Versatz aufweisen und in den mittleren und rechten Abbildungen der Hand-Werkzeugmaschine 20 die Markierungen oder Anzeigen IA und IP unterschiedliche Winkelabstände und Querabstände zueinander aufweisen. Daran erkennt der Bediener, wie er die Hand-Werkzeugmaschine 20 optimal bezüglich der Soll-Arbeitslinie AL vorzuschieben hat bzw. welchen Winkel er einzustellen hat, um der Stellmotoranordnung 50 sozusagen die Arbeit zu erleichtern.

Anstelle oder in Ergänzung der Anzeigeeinrichtung 55, die eine Ausgabeeinrichtung 56 oder einen Bestandteil einer Ausgabeeinrichtung 56 darstellt, können beispielsweise auch Hinweis-Leuchten 57A, 57B vorgesehen sein, die mit farbigem Licht, zum Beispiel Rot und Grün, und/oder optischen Symbolen (Pfeilen oder dergleichen) dem Bediener signalisieren, ob er die Hand-Werkzeugmaschine 20 optimal im Bereich der Soll-Arbeitslinie AL oder entlang der Soll-Arbeitslinie AL führt.

Weiterhin kann auch eine akustische Signalisierung sinnvoll sein. So weist die Ausgabeeinrichtung 56 beispielsweise einen Lautsprecher 58 auf, der dem Bediener akustisch signalisiert, beispielsweise durch einen Warnton, wenn er das Führungselement 30 derart führt, dass der durch die Stellmotoranordnung 50 einstellbare Stellbereich verlassen wird.

Die vorgenannten optischen Anzeigen IA und IP und/oder der Hinweis-Leuchten 57A, 57B können auch ohne die Stellmotoranordnungen 50, 150 bei einer manuellen Führung der Hand-Werkzeugmaschine 20 entlang der Soll-Arbeitslinie AL Verwendung finden. Anhand dieser Anzeigemittel kann der Bediener nämlich Hinweise erhalten, wie er die Hand-Werkzeugmaschine 20 zu führen hat, damit die Soll-Arbeitslinie AL eingehalten wird.

Ein weiteres sensorisches Konzept zur Erfassung der Werkstückmarkierungen M1, M2 ist anhand eines Systems 110 gemäß Figur 4 dargestellt. Eine Markierungserfassungseinrichtung 170 ist ebenso wie die Markierungserfassungseinrichtung 70 eine von der Hand-Werkzeugmaschine 20 separate, antriebslose und somit mobile und bequem handhabbare Komponente. Ein Markierungsaufnehmer 171 der Markierungserfassungseinrichtung 70 weist beispielsweise ein Gehäuse 176 auf, welches beispielsweise als eine mechanische Referenz unmittelbar an eine oder beide der Werkstückmarkierungen M1 oder M2 anlegbar wäre, beispielsweise mit seiner Längsseite oder dergleichen. Vorliegend ist jedoch ein optisches Konzept realisiert, bei dem eine optische Referenz 172, nämlich ein Lichtstrahl, von einem Lichtgeber 173 ausgegeben wird. Der Lichtgeber 173 umfasst beispielsweise einen Laserstrahl oder dergleichen, den der Bediener auf die Werkstückmarkierungen M1 und M2 richtet.

Die Markierungserfassungseinrichtung 171 weist weiterhin eine Kamera 175 sowie einen Sender 174 für die Koordinatendaten KD1 und KD2 auf, die anhand der Kamera 175 ermittelbar sind. Beispielsweise erfasst die Kamera 175 zum einen die Werkstückmarkierung M1, M2 in Relation zu einem sozusagen optischen oder mechanischen Koordinatengeber 180.

Der Koordinatengeber 180 umfasst beispielsweise eine Fläche 181, insbesondere ein Band, welche bzw. welches entlang der Arbeitslinie AL oder neben der Arbeitslinie AL durch einen Bediener am Werkstück W platzierbar ist. An der Fläche 181 sind Identifizierer 182 in einem eindeutigen Muster vorgesehen, an der sich die Markierungserfassungseinrichtung 170 orientieren kann. Die Identifizierer 182 umfassen beispielsweise ein Würfelmuster mit ungleichmäßiger Verteilung oder dergleichen. Der Koordinatengeber 180 ist beispielsweise anhand von Befestigungsmitteln 183, insbesondere Haken, die an den Werkstück-Stirnseiten WS befestigbar sind, am Werkstück W befestigbar. Selbstverständlich kann die Fläche 181 auch von einer Folie oder einer Wand oder dergleichen gebildet sein, die beispielsweise aufgrund von Unterdruck oder dergleichen anderer Adhäsion an der Flachseite WO anhaften kann. Die Markierungserfassungseinrichtung 170 erfasst anhand der Kamera 174 dementsprechend die Werkstückmarkierungen M1 und M2 in Relation zu dem Koordinatengeber 180 und zeigt dies zweckmäßigerweise noch an einer Anzeigeeinrichtung 175 an. Beispielsweise kann die Markierungserfassungseinrichtung 70 anhand eines Abstands zwischen einerseits der Werkstückmarkierung M1, M2 und andererseits dem Koordinatengeber 180 die Koordinatendaten KD1 und KD2 ermitteln und anhand ihres Koordinatensenders 174 an die Schnittstelle 64 der Hand-Werkzeugmaschine 20 übertragen.

Die Hand-Werkzeugmaschine 20 weist Orientierungsmittel 167, beispielsweise eine Kamera 166, zur Orientierung an dem Koordinatengeber 180 auf. Die Steuerungseinrichtung 60 steuert beispielsweise die Stellmotoranordnung 50 zur Einhaltung der Soll-Arbeitslinie AL an, wobei sie Daten von der Kamera 166 bzw. den Orientierungsmitteln 167 auswertet.

Weiterhin ist es möglich, dass nur eine einzige Werkstückmarkierung ermittelt wird, beispielsweise die Werkstückmarkierung M1, die dann den Ausgangspunkt für den zu bearbeitenden Arbeitsbereich definiert. Wenn in diesem Fall zudem noch die Orientierung der Werkstückmarkierung M1 bekannt ist, beispielsweise eine Richtungskomponente bezüglich der Soll-Arbeitslinie AL, genügen diese Informationen der Markierungserfassungseinrichtung 70 und/oder der Steuerungseinrichtung 60 zur Ermittlung der Soll-Arbeitslinie AL.

Ferner können beispielsweise an einem Computer 11 Vorgabedaten VO, insbesondere CAD-Daten, vorgehalten und/oder erstellt werden, beispielsweise durch ein CAD-Programm, die den Arbeitsbereich definieren, beispielsweise den Verlauf und/oder die Länge der Arbeitslinie AL, die Geometrie des Arbeitsbereichs AB oder dergleichen. Um diesen Arbeitsbereich, beispielsweise eine Arbeitslinie oder eine zu bearbeitende Fläche, auf dem Werkstück W sozusagen zu positionieren oder zu lokalisieren, kann der Bediener anhand der Markierungserfassungseinrichtung 70 beispielsweise die Werkstückmarkierung M1 indizieren und deren Koordinatendaten KD1 an die Hand-Werkzeugmaschine 20 übermitteln. Diese weist eine Empfangsschnittstelle 69 zum Empfang der Vorgabedaten VO auf. Anhand der Vorgabedaten VO und der Koordinatendaten KD1 der Werkstückmarkierung M1 kann beispielsweise die Soll-Arbeitslinie AL oder AL2 oder aber auch der flächige Bereich AB definiert sein. Das Steuerungsprogramm 63 ermittelt beispielsweise anhand der Vorgabedaten VO und der Koordinatendaten KD1 die Arbeitsbereichsdaten AD.

Bei den bisherigen Ausführungsbeispielen wurde davon ausgegangen, dass das Werkstück W nach der Erfassung der mindestens einen Werkstückmarkierung M1, M2 an Ort und Stelle bezüglich des zweidimensionalen oder dreidimensionalen Koordinatensystems KR2 oder KR3 bleibt. Es ist aber auch möglich, dass zwischen der Erfassung der Werkstückmarkierung(en) und der Werkstückbearbeitung das Werkstück W bewegt wird, was am Ausführungsbeispiel gemäß Figuren 14 und 15 näher erläutert wird.

So ist es beispielsweise möglich, dass anhand der Markierungserfassungseinrichtung 70 zunächst die beiden Werkstückmarkierungen M1 und M2 erfasst werden und dann das Werkstück W in eine andere Lage bezüglich der Koordinatengeber 80, 81 gebracht wird, die vorzugsweise frei im Arbeitsraum R angeordnet sind, jedenfalls nicht am zu bearbeitenden Werkstück W platziert sind, wie bei den vorangegangenen Ausführungsbeispielen. Somit sind die Werkstückmarkierungen M1 und M2 sozusagen auf ein von dem Werkstück W vollständig unabhängiges zweidimensionales oder dreidimensionales Koordinatensystem bezogen.

Nun ist es möglich, beispielsweise anhand einer Kamera 90, die ebenfalls frei im Arbeitsraum R angeordnet ist, Werkstückbewegungen des Werkstücks W nach der Erfassung der Werkstückmarkierungen M1 und M2 sozusagen zu verfolgen. Die Kamera 90 übermittelt beispielsweise an die Hand-Werkzeugmaschine 20 Koordinatendaten des Werkstücks W, die die Position des Werkstücks W bei der Erfassung der Werkstückmarkierungen M1 und M2 kennzeichnen.

Die Kamera 90 sendet beispielsweise anhand eines drahtlosen oder drahtgebundenen Senders 91 an die Schnittstelle 64 Koordinatendaten des Werkstücks W, nämlich Werkstückpositionsdaten WP1, während der in Figur 14 dargestellten Erfassung der Werkstückmarkierungen M1 und M2.

Wenn anschließend das Werkstück W bewegt wird, beispielsweise um eine zu der Arbeitslinie AL parallele Achse geschwenkt wird, so dass die Flachseite WU sozusagen nach oben kommt (Figur 15) und das Werkstück W eine Bearbeitungsposition BP einnimmt, erfasst die Kamera 90 wiederum die Koordinatendaten des Werkstücks W, nämlich Werkstückpositionsdaten WP2, welche die Kamera 90 wiederum an die Schnittstelle 64 der Hand-Werkzeugmaschine 20 versendet.

Das Steuerungsprogramm 63 kann anhand der Koordinatendaten KD1 und KD2 der Werkstückmarkierungen M1 und M2 sowie der Werkstückpositionsdaten WP1 WP2, die die Kamera 90 anhand der Position des Werkstücks W1 bei der Erfassung der Werkstückmarkierungen M1 und M2 und unmittelbar vor der Bearbeitung durch die Hand-Werkzeugmaschine, entsprechend Figur 15, ermittelt, die Arbeitsbereichsdaten AD ermittelt. Beispielsweise bildet das Steuerungsprogramm 3 eine Differenz zwischen den Werkstück-Positionsdaten WP2 und WP1 und transformiert die Koordinatendaten KD1, KD2 mit den entsprechenden, aus der Differenz gewonnenen Verfolgungsdaten VD.

Selbstverständlich kann die Kamera 90 über die Werkstückpositionsdaten WP1 und WP2 hinaus weitere, in die Verfolgungsdaten VD eingehende Werkstückpositionsdaten ermitteln, beispielsweise während der Bewegung des Werkstücks W in die Bearbeitungsposition BP.

Die Kamera 90 ist vorzugsweise eine Stereokamera, die zwei Kombinationen von Objektiv und Sensor 92, 93 aufweist, um stereoskopisch und somit räumlich die Position des Werkstücks W im Arbeitsraum R zu erfassen. Bevorzugt hat die Kamera 90 noch einen Projektor 94, beispielsweise zum Projizieren eines Streifenmusters oder einer sonstigen Identifizierungsstruktur oder eines Reliefmusters. Somit kann die Kamera beispielsweise ein dreidimensionales Bild des Werkstücks W ermitteln.

An dieser Stelle sei noch ergänzt, dass selbstverständlich auch die Führung der Hand-Werkzeugmaschine interaktiv mit der Kamera 90 erfolgen kann, d.h. dass beispielsweise das Führungsmittel 65 von der Kamera 90 eine jeweilige Relativposition der Hand-Werkzeugmaschine bezüglich des Koordinatensystems KR2 oder KR3 empfängt, um das Arbeitswerkzeug 25 entsprechend der Soll-Arbeitslinie AL zu führen.

Die Kamera 90 bildet eine Koordinatenerfassungseinrichtung 95, die beispielsweise die Koordinaten des Werkstücks W und/oder der Hand-Werkzeugmaschine 20 bezüglich des Koordinatensystems KR2 oder KR3 erfassen kann.

Die Koordinatenerfassung oder Positionserfassung kann dadurch erleichtert sein, dass beispielsweise an der Hand-Werkzeugmaschine 20 eine oder mehrere Geräte-Referenzmarkierungen 68 und/oder an dem Werkstück W eine oder mehrere Werkstückpositionsreferenzmarkierungen 98 angeordnet sind.

Die Geräte-Referenzmarkierungen 68 sind vorzugsweise in verhältnismäßig großen Abständen an der Hand-Werkzeugmaschine 20 angeordnet, beispielsweise an einander entgegengesetzten Extremitäten des Maschinengehäuses 29. Die Geräte-Referenzmarkierungen 68 umfassen beispielsweise reflektierende Markierungen, Kontrast-Markierungen oder dergleichen, die durch die Kamera 90 erfassbar sind.

Beispielsweise eignet sich der Koordinatengeber 180 als Werkstückpositionsreferenzmarkierung. Es können auch dreidimensionale Markierungen als Werkstückpositionsreferenzmarkierungen vorgesehen sein, beispielsweise Basiskörper oder Gehäuse der nachfolgend erläuterten Werkstückpositionserfassungseinrichtungen 97. Die Kamera 90 kann deren Position sozusagen in der in Figur 14 dargestellten Lage sowie in der Bearbeitungsposition BP gemäß Figur 15 erfassen.

Die Werkstückpositionserfassungseinrichtungen 97A, 97B sind beispielsweise anhand von Befestigungsmitteln 197, zum Beispiel Haftmitteln, insbesondere Klebeelementen, Saugköpfen oder dergleichen, an dem Werkstück W lösbar befestigbar. Die Werkstückpositionserfassungseinrichtung 97A ist zum Beispiel an der Flachseite WO, die Werkstückpositionserfassungseinrichtung 97B an der Flachseite WU angeordnet.

Zweckmäßig ist ein Konzept, bei dem die Werkstückpositionserfassungseinrichtungen 97A, 97B sozusagen aktiv ihre jeweilige Position und somit die Position des Werkstücks W im Arbeitsraum R erfassen. Die Werkstückpositionserfassungseinrichtungen 97B, 97B weisen beispielsweise Sensoren 99 zum Empfang der Referenzinformationen RX und/oder RY der Koordinatengeber 80, 81 auf. Die Werkstückpositionserfassungseinrichtungen 97B, 97B können somit Werkstück-Positionsdaten WP1, WP2, die mit der jeweiligen Position des Werkstücks W bei der Erfassung der Werkstückmarkierungen M1, M2 (Figur 14) sowie der zur Bearbeitung durch die Hand-Werkzeugmaschine 20 vorgesehenen Bearbeitungsposition BP entsprechen (Figur 15), an die Steuerungseinrichtung 60, beispielsweise über die Schnittstelle 64 drahtlos oder drahtgebunden, übermitteln, wozu sie beispielsweise drahtgebunden und/oder drahtlos übermittelnde Sender 100 aufweisen.

Die Steuerungseinrichtung 60 kann anhand der Werkstück-Positionsdaten WP1, WP2 beispielsweise Verfolgungsdaten VD ermitteln, um anhand dieser Verfolgungsdaten VD und der Koordinatendaten KD1, KD2 der Werkstückmarkierungen M1, M2 die nunmehr auf der nach oben gedrehten Flachseite WU befindliche Soll-Arbeitslinie AL zu ermitteln.

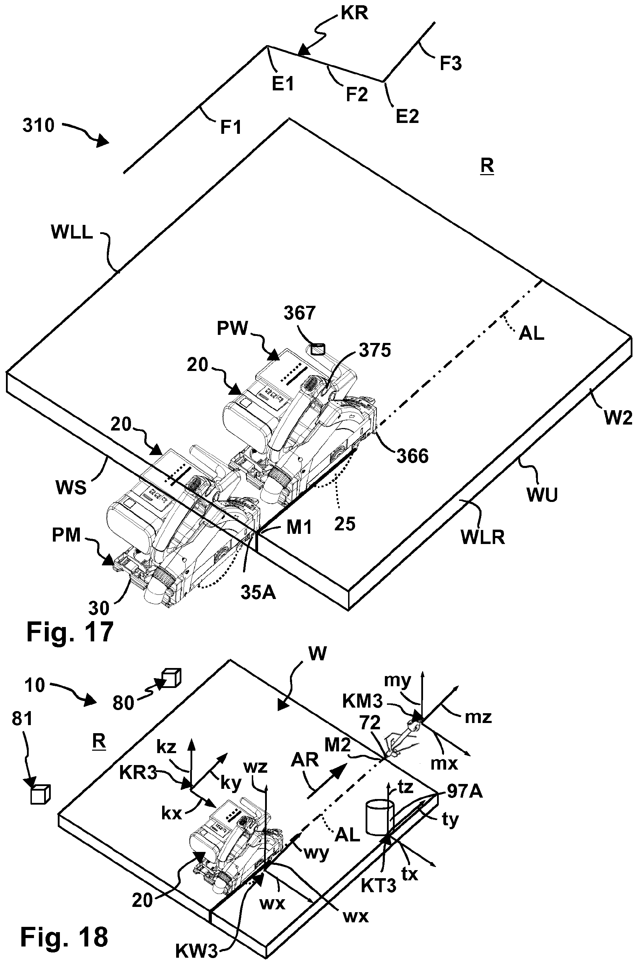

Bei dem in Figur 17 dargestellten System 310 weist die Hand-Werkzeugmaschine 20 eine oder mehrere Kameras 366, 367 auf. Die mindestens eine Kamera 366, 367 kann beispielsweise in einer Erfassungsposition oder Messposition PM zunächst eine Werkstückmarkierung erfassen. Die Werkstückmarkierung wird beispielsweise durch eine optische Werkstückmarkierung in der Art der Werkstückmarkierung M1, beispielsweise eine Bleistift-Markierung und/oder eine gedachte Linie, oder einen gewünschten Abstand zwischen einerseits der Längsseite 35 des Führungselements 30, die in diesem Fall eine mechanische Referenz 35A bereitstellt oder bildet, und der Werkstück-Längsseite WLR definiert. Während der Erfassung der Werkstückmarkierung ist der Antriebsmotor 22 ausgeschaltet, weshalb die Hand-Werkzeugmaschine 20 optimal bezüglich des Werkstücks W für die Erfassung ihrer aktuellen Position und somit der Referenz 35A ruhig steht. Die Handhabung ist darüber hinaus einfach.

Die mindestens eine Kamera 366 ist beispielsweise in der Nähe des Führungselements 30 angeordnet. Die Kamera 367 hingegen ist zu dem Führungselement 30 beabstandet, zum Beispiel am Maschinengehäuse 21, angeordnet. Die mindestens eine Kamera 366, 367 erfasst beispielsweise eine Position der Hand-Werkzeugmaschine 20 im Arbeitsraum R anhand einer Erfassung einer Raumkontur KR des Arbeitsraums R. Dazu kann der Bediener beispielsweise den Schalter 23 antippen, ohne dass der Antriebsmotor 22 eingeschaltet wird. Es kann aber auch ein spezieller Schalter 375, beispielsweise in der Art des Schalters 75 der Markierungserfassungseinrichtung 70 vorgesehen sein, um die Referenzposition oder die Position der mindestens einen Werkstückmarkierung M1 zu erfassen.

Die Raumkontur KR umfasst beispielsweise zueinander winkelige Flächen F1, F2 und F3. Zwischen den Flächen F1, F2 ist eine Raum-Innenecke E1 vorhanden, zwischen den Flächen F2 und F3 eine Raum-Außenecke E2. Somit kann sich die Hand- Werkzeugmaschine 20 sozusagen im Arbeitsraum AR anhand der Raumkontur KR orientieren, um beispielsweise zunächst die Werkstückmarkierung M1 in einer Erfassungsposition PM zu ermitteln und sodann, nach Einschalten des Antriebsmotors 22, anhand der Führungsmittel 65 das Arbeitswerkzeug 25 in Bezug auf die Soll-Arbeitslinie AL zu führen.

Anstelle einer oder mehrerer der Kameras 366, 367 und/oder der Kamera 90 kann selbstverständlich auch ein Lidar, Radar oder dergleichen vorgesehen sein, welches sich für die Erfassung der Raumkontur KR oder zur Positionsermittlung beispielsweise der Hand-Werkzeugmaschine 20 eignet.

An dem Ausführungsbeispiel gemäß Figur 18 sollen einige Transformationsprozesse von Koordinaten und Koordinatensystemen erläutert werden. So ist beispielsweise bezüglich des Arbeitsraumes R das Koordinatensystem KR3 ortsfest und wird insbesondere durch die Koordinatengeber 80 und/oder 81 sozusagen vorgegeben. Die Koordinatengeber 80, 81 können frei im Arbeitsraum R angeordnet sein, also abseits des Werkstückes W.

Die Markierungserfassungseinrichtung 70 weist beispielsweise ein lokales dreidimensionales Koordinatensystem KM3 auf, dessen Koordinatenachsen mx, my und mz zueinander winkelig sind. Der Punkt der Referenz 72 ist von diesem Koordinatensystem KM3 beispielsweise in Bezug auf die Achse mz um einen Abstandswert entfernt, beispielsweise 5 cm. Als Quaternion ist beispielsweise der Ort der Referenz 72, im zeichnerischen Beispiel gleichzeitig der Werkstückmarkierung M2, wo sich die Referenz 72 gemäß Figur 18 befindet, beschreiben als

$$Q[72] = (0,0,0\ \text{-}5)$$

Bei der Nutzung von Quaternionen in Bezug auf die Markierungserfassungseinrichtung 70 ist es beispielsweise möglich, dass zum einen das Quaternion der Referenz 72 bzw. der Werkstückmarkierung M2 erfasst wird, zum anderen das Quaternion des Koordinatensystems KM3, die miteinander multipliziert werden, um ein Zwischenquaternion zu erhalten.

Die Koordinaten der Werkstückmarkierung M2 ergeben sich nun dadurch, dass das Zwischenquaternion mit dem Zwischenquaternion$^{-1}$ multipliziert wird (dem invertierten Quaternion).

Die Sensoren 73 des Markierungsaufnehmers 71 bzw. der Markierungserfassungseinrichtung 70 ermitteln, die Position des lokalen, auf die Markierungserfassungseinrichtung 70 bezogenen Koordinatensystems KM3 relativ zum bezüglich des Arbeitsraumes R ortsfesten, sozusagen globalen Koordinatensystems KR3, insbesondere anhand einer translatorischen Verschiebung des Koordinatensystems KM3 in Bezug zu dem Koordinatensystem KR3. Zudem können die Sensoren 73 oder deren Auswerteeinrichtung, die in der Zeichnung nicht einzeln dargestellt ist, die Rotation des Koordinatensystems KM3 bezüglich des Koordinatensystem KR3 ermitteln, beispielsweise anhand der eingangs genannten Formeln (1), (2) und (3). Somit kann der Ort oder der Punkt der Referenz 72, also vorliegend der Werkstückmarkierung M2, auf das Koordinatensystem KR3 umgerechnet werden. Dies kann, wie erläutert, die Markierungserfassungseinrichtung 70 leisten, aber auch beispielsweise die Steuerungseinrichtung 60 der Hand-Werkzeugmaschine 20, wenn sie die Koordinatendaten der Werkstückmarkierung M2 bzw. des Ortes der Referenz 72 sowie mindestens eine Information über die Orientierung des lokalen Koordinatensystems KM3 der Markierungserfassungseinrichtung 70 erhält.

Auch die Führungsmittel 65 oder die Steuerungseinrichtung 60 können mit einem lokalen, auf die Hand-Werkzeugmaschine 20 bezogenen Koordinatensystem arbeiten, beispielsweise einem auf die Hand-Werkzeugmaschine 20 bezogenen Koordinatensystem KW3, das Koordinatenachsen wx, wy und wz aufweist, die zueinander rechtwinkelig sind. Auch diese können anhand der beispielsweise oben erwähnten Rotationsmatrizen (1), (2) und (3) auf das globale, auf den Arbeitsraum R bezogene Koordinatensystem KR3 umgerechnet werden, beispielsweise anhand von Programmcode, den das Steuerungsprogramm 63 enthält und der Prozessor 61 ausführen kann. Beispielsweise können die Führungsmittel 65 oder die Steuerungseinrichtung 60 die Koordinaten eines Eindringbereichs EB, zum Beispiel einer vorderen Schnittkante in das Werkstück W, des Arbeitswerkzeugs 25 auf das lokale Koordinatensystem KW3 beziehen, um das Arbeitswerkzeug 25 optimal bezüglich des Arbeitsbereichs AB, insbesondere der Arbeitslinie AL, zu positionieren und/oder zu führen.

Auf gleiche Weise kann auch die Position des Werkstücks W im Arbeitsraum R verfolgt werden, beispielsweise anhand der Werkstückpositionserfassungseinrichtung 97, die ebenfalls ihr lokales, bezüglich des Arbeitsraumes R sozusagen mobiles Koordinatensystem KT3 mit Koordinatenachsen tx, ty und tz aufweist. Der Ort der Referenz 72 bzw. der Werkstückmarkierung M2 ist in der in Figur 18 dargestellten Situation bezüglich des lokalen Koordinatensystems KM3 der Markierungserfassungseinrichtung 70 und in Bezug auf das Koordinatensystem KT3 der Werkstückpositionserfassungseinrichtung 97 bekannt. Wenn nun die Lage der Werkstückmarkierung M2 auf das Koordinatensystem KT3 bekannt ist und das Werkstück W anschließend bewegt wird, kann nach der Umpositionierung des Werkstücks W, beispielsweise dessen Drehung und/oder translatorischer Verschiebung, die neue Lage des Koordinatensystems KT3 ermittelt werden, auf welches ja der Ort bzw. die Koordinaten der Werkstückmarkierung M2 bezogen sind. Somit können die neuen Koordinaten der Werkstückmarkierung M2 in Bezug auf das globale, auf den Arbeitsraum R bezogene Koordinatensystem KM3 ermittelt werden. Eine Rotation des Werkstücks W um eine Achse, beispielsweise um seine Längsachse oder um eine Längsmittelachse, kann insbesondere anhand der eingangs genannten Formeln (1) - (3) in Bezug auf das Koordinatensystem KR3 verfolgt werden.

**Patentansprüche**

1.  System zur Bearbeitung eines Werkstücks (W),

- mit einer Hand-Werkzeugmaschine (20), die einen Antriebsmotor (22), eine durch den Antriebsmotor (22) antreibbare Werkzeugaufnahme (24) für ein Arbeitswerkzeug (25) zur Bearbeitung des Werkstücks (W) und ein Führungselement (30) mit einer Führungsfläche (31) zum Führen der Hand-Werkzeugmaschine (20) an dem Werkstück (W) aufweist,

- mit einer Markierungserfassungseinrichtung (70) zur Erfassung von Koordinatendaten (KD1, KD2) mindestens einer Werkstückmarkierung (M1, M2) des Werkstücks (W), wobei die Hand-Werkzeugmaschine (20) Führungsmittel (65) zum Führen des Arbeitswerkzeugs (25) entlang des Werkstücks (W) in Abhängigkeit von den Koordinatendaten (KD1, KD2) der mindestens einen Werkstückmarkierung (M1, M2) aufweist, wobei die Markierungserfassungseinrichtung (70) eine optische und/oder mechanische Referenz (71) aufweist, die auf und/oder unmittelbar neben der mindestens einen Werkstückmarkierung (M1, M2) positionierbar ist,

wobei die Markierungserfassungseinrichtung (70) zur Ermittlung der Koordinatendaten (KD1, KD2) der mindestens einen Werkstückmarkierung (M1, M2) in Bezug auf ein zumindest zweidimensionales Koordinatensystem (KR2, KR3) ausgestaltet ist, welches von der Werkstückmarkierung (M1, M2) unabhängig ist,

und wobei die Führungsmittel (65) der Hand-Werkzeugmaschine (20) zu einem Führen des Arbeitswerkzeugs (25) mit Bezug auf das zumindest zweidimensionale Koordinatensystem (KR2, KR3) in einem Arbeitsbereich (AB) ausgestaltet sind, der durch Arbeitsbereichsdaten (AD) geometrisch definiert ist, die anhand der Koordinatendaten (KD1, KD2) der mindestens einen Werkstückmarkierung (M1, M2) ermittelt sind,

**dadurch gekennzeichnet, dass** es zur Bereitstellung des zumindest zweidimensionalen Koordinatensystems (KR2, KR3) mindestens einen in einem Arbeitsraum (R), in dem das Werkstück (W) angeordnet ist, platzierbaren Koordinatengeber (80, 81; 180) aufweist und die Führungsmittel (65) und/oder die Markierungserfassungseinrichtung (70) zur Ermittlung der Position des mindestens einen Koordinatengebers (80, 81; 180) und/oder zur Ermittlung von durch den mindestens einen Koordinatengeber (80, 81) gesendeten Referenzinformationen (RX, RY) ausgestaltet sind.

2. System nach Anspruch 1, **dadurch gekennzeichnet, dass** der mindestens eine Koordinatengeber (80, 81; 180) Befestigungsmittel (83), insbesondere Haft-Befestigungsmittel (83A) und/oder Haken-Befestigungsmittel (183) und/oder Saug-Befestigungsmittel (86), zur Befestigung an dem Werkstück (W) und/oder einem Untergrund und/oder mindestens eine Stellfläche (82) zum Abstellen auf einem Untergrund und/oder dem Werkstück (W) aufweist.

3. System nach einem der vorhergehenden Ansprüche, **dadurch gekennzeichnet, dass** der mindestens eine Koordinatengeber (80, 81) zum Senden von Referenzinformationen (RX, RY) in zueinander winkeligen Richtungen und/oder in zueinander parallelen Ebenen ausgestaltet ist, wobei die Markierungserfassungseinrichtung (70) und/oder die Führungsmittel (65) zu einem Erfassen dieser Referenzinformationen (RX, RY) ausgestaltet ist, und/oder dass die Führungsmittel (65) der Hand-Werkzeugmaschine (20) und/oder die Markierungserfassungseinrichtung (70) ein Orientierungsmittel (67, 78) zur Orientierung bezüglich des zumindest zweidimensionalen Koordinatensystems (KR2, KR3) in einem Arbeitsraum (R), in welchem das Werkstück (W) angeordnet ist, aufweisen, wobei das Orientierungsmittel (67, 78) zur Erfassung geometrischer Konturen des Arbeitsraums (R) und/oder zum Empfang von Referenzinformationen (RX, RY), welche die Lage der Hand-Werkzeugmaschine (20) und/oder der Markierungserfassungseinrichtung (70) und/oder des Werkstücks (W) in dem Arbeitsraum (R) charakterisieren, ausgestaltet ist.

4. System nach einem der vorhergehenden Ansprüche, **dadurch gekennzeichnet, dass** die Markierungserfassungseinrichtung (70) zur Erfassung der Koordinatendaten (KD1, KD2) der mindestens einen Werkstückmarkierung (M1, M2) nach erfolgter Positionierung der Referenz (71) bezüglich der Werkstückmarkierung (M1, M2) in Abhängigkeit von mindestens einer Auslösebedingung ausgestaltet ist und/oder dass die Markierungserfassungseinrichtung (70) zur taktilen und/oder optischen Anwahl der mindestens einen Werkstückmarkierung (M1, M2) ausgestaltet ist und/oder dass die Auslösebedingung eine durch einen Sensor und/oder elektrischen Schalter der Markierungserfassungseinrichtung (70) erfassbare Bedienhandlung eines Bedieners und/oder eine zeitliche Bedingung, insbesondere ein Verweilen der Referenz (71) bezüglich der mindestens einen Werkstückmarkierung (M1, M2) für eine vorbestimmte Zeit, und/oder eine Abstandserfassung eines Abstands zwischen der Referenz (71) und der mindestens einen Werkstückmarkierung (M1, M2) umfasst, wobei bei der Abstandserfassung eine Unterschreitung eines vorbestimmten Grenzabstands zwischen der Referenz (71) und der Werkstückmarkierung (M1, M2) erfasst wird.

5. System nach einem der vorhergehenden Ansprüche oder dem Oberbegriff des Anspruchs 1, **dadurch gekennzeichnet, dass** die Markierungserfassungseinrichtung (70) eine von der Hand-Werkzeugmaschine (20) separate oder separierbare Komponente ist oder einen Bestandteil der Hand-Werkzeugmaschine (20) bildet, wobei insbesondere die Referenz (71) an dem Führungselement (30) angeordnet ist.

6. System nach einem der vorhergehenden Ansprüche, **dadurch gekennzeichnet, dass** die Hand-Werkzeugmaschine (20) eine drahtgebundene und/oder drahtlose Schnittstelle (64) für die Markierungserfassungseinrichtung (70) aufweist, über die die Markierungserfassungseinrichtung (70) die Koordinatendaten (KD1, KD2) der mindestens einen Werkstückmarkierung (M1, M2) an die Hand-Werkzeugmaschine (20) übermitteln kann und/oder die Hand-Werkzeugmaschine (20) eine Halteaufnahme (38) zum Halten der Markierungserfassungseinrichtung (70) aufweist.

7. System nach einem der vorhergehenden Ansprüche, **dadurch gekennzeichnet, dass** die Markierungserfassungseinrichtung (70) keinen Antriebsmotor (22) zum Antreiben eines Arbeitswerkzeugs (25) aufweist und/oder zumindest bei der Erfassung der Werkstückmarkierung (M1, M2) nicht motorisch angetrieben oder antreibbar ist und/oder dass die Markierungserfassungseinrichtung (70) einen Stift umfasst oder stiftförmig ist und/oder einen optischen Lichtgeber (179) zur Bereitstellung der optischen Referenz aufweist.

8. System nach einem der vorhergehenden Ansprüche, **dadurch gekennzeichnet, dass** die Führungsmittel (65) eine Ausgabeeinrichtung (56) zur optischen und/oder akustischen Ausgabe einer den Arbeitsbereich (AB) betreffenden oder definierenden Vorgabeinformation, insbesondere einer Soll-Arbeitslinie (AL), für den Bediener aufweisen und/oder dass die Führungsmittel (65) eine Stellmotoranordnung (50) zum Verstellen einer Relativposition der Werkzeugaufnahme (24) bezüglich des Führungselements (30) aufweisen und/oder dass die Führungsmittel (65) und/oder die Markierungserfassungseinrichtung (70) zur Ermittlung der Arbeitsbereichsdaten (AD) des Arbeitsbereichs, insbesondere einer zumindest abschnittsweisen geraden Arbeitslinie, anhand von auf das zumindest zweidimensionale Koordinatensystem (KR2, KR3) bezogene Koordinatendaten (KD1, KD2) mindestens zweier Werkstückmarkierungen (M1, M2), die einen Abstand zueinander haben, ausgestaltet ist und/oder dass die Führungsmittel (65) und/oder die Markierungserfassungseinrichtung (70) eine Empfangsschnittstelle (69) zum Empfang von den Arbeitsbereich (AB), insbesondere eine Arbeitslinie, definierenden Vorgabedaten (VO), insbesondere von einer CAD-Einrichtung, aufweisen und zur Ermittlung der Arbeitsbereichsdaten (AD) des Arbeitsbereichs (AB) in Abhängigkeit von den Vorgabedaten (VO) ausgestaltet sind.

9. System nach einem der vorhergehenden Ansprüche, **dadurch gekennzeichnet, dass** der Arbeitsbereich (AB) eine Arbeitslinie, entlang derer das Arbeitswerkzeug (25) bezüglich des Werkstücks (W) zu führen ist, und/oder mindestens eine zu einer Bearbeitung des Werkstücks (W) vorgesehene Bearbeitungsfläche des Werkstücks (W) umfasst oder dadurch gebildet ist.

10. System nach einem der vorhergehenden Ansprüche, **dadurch gekennzeichnet, dass** es zur Erfassung einer jeweiligen Position der Markierungserfassungseinrichtung (70) und/oder der Hand-Werkzeugmaschine (20) eine in dem Arbeitsraum (R), in welchem das Werkstück (W) angeordnet ist, platzierbare Koordinatenerfassungseinrichtung (95) aufweist, die eine von der Hand-Werkzeugmaschine (20) oder der Referenz (71) der Markierungserfassungseinrichtung (70) separate Baueinheit bildet, und/oder dass es ein Verfolgungsmittel (96) zur Verfolgung einer Bewegung des Werkstücks (W) nach der Erfassung der mindestens einen Werkstückmarkierung (M1, M2) durch die Markierungserfassungseinrichtung (70) bis zu einer zu der Bearbeitung des Werkstücks (W) durch die Hand-Werkzeugmaschine (20) vorgesehenen Bearbeitungsposition (BP) aufweist, wobei die Verfolgungsmittel (96) zur Bereitstellung von diese Bewegung und/oder die Bearbeitungsposition (BP) charakterisierenden Verfolgungsdaten (VD) ausgestaltet ist, so dass die Führungsmittel (65) der Hand-Werkzeugmaschine (20) das Arbeitswerkzeug (25) anhand von Arbeitsbereichsdaten (AD) führen, die anhand der Koordinatendaten (KD1, KD2) der mindestens einen Werkstückmarkierung (M1, M2) und der Verfolgungsdaten (VD) ermittelt sind, wobei vorteilhaft vorgesehen ist, dass das Verfolgungsmittel (96) mindestens eine an dem Werkstück (W) nach der Erfassung der mindestens einen Werkstückmarkierung (M1, M2) und zumindest bis zum Erreichen der Bearbeitungsposition (BP) befestigten Werkstückpositionserfassungseinrichtung (97A, 97B) und/oder Werkstückpositionsreferenzmarkierung (98) umfasst.

11. System nach einem der vorhergehenden Ansprüche, **dadurch gekennzeichnet, dass** an der Markierungserfassungseinrichtung (70) und/oder der Hand-Werkzeugmaschine (20) und/oder einer an dem Werkstück (W) befestigbaren Werkstückpositionserfassungseinrichtung (97) eine Mehrzahl von Geräte-Referenzmarkierungen (68) und/oder Sensoren zur Ermittlung der Orientierung in dem zumindest zweidimensionalen Koordinatensystem (KR2, KR3) angeordnet ist.

**12.** System nach einem der vorhergehenden Ansprüche, **dadurch gekennzeichnet, dass** an der Markierungserfassungseinrichtung (70) und/oder der Hand-Werkzeugmaschine (20) und/oder einer an dem Werkstück (W) befestigbaren Werkstückpositionserfassungseinrichtung (97) mindestens zwei Geräte-Referenzmarkierungen (68) und/oder mindestens zwei Sensoren zur Ermittlung der Orientierung in dem zumindest zweidimensionalen Koordinatensystem (KR2, KR3) an voneinander entfernten Extremitäten und/oder Endbereichen und/oder in einem Abstand zueinander, der zumindest der Hälfte, vorzugsweise zumindest zwei Drittel, einer jeweiligen Erstreckungslänge der Hand-Werkzeugmaschine (20) oder der Markierungserfassungseinrichtung (70) entspricht, angeordnet sind.

**13.** System nach einem der vorhergehenden Ansprüche, **dadurch gekennzeichnet, dass** mindestens eine Komponente des Systems, die von der Hand-Werkzeugmaschine (20), insbesondere deren Steuerungseinrichtung (60), und/oder von der Markierungserfassungseinrichtung (70) und/oder von einer an dem Werkstück (W) positionierten oder positionierbaren Werkstückpositionserfassungseinrichtung (97A, 97B) gebildet ist, zu einer Translation und/oder Umrechnung von Koordinatendaten mindestens eines Punktes aus einem auf die jeweilige Komponente bezogenen lokalen, insbesondere zweidimensionalen oder dreidimensionalen, Koordinatensystem (KW3, KM3, KT3) in das zumindest zweidimensionale, insbesondere bezüglich des Arbeitsraums (R) ortsfeste, Koordinatensystem (KR2, KR3) und/oder umgekehrt ausgestaltet ist.

**14.** System nach einem der vorhergehenden Ansprüche, **dadurch gekennzeichnet, dass** die Werkzeugaufnahme (24) der Hand-Werkzeugmaschine bezüglich des Führungselements (30) anhand einer Lageranordnung (40) beweglich gelagert und anhand einer Stellmotoranordnung (50) antreibbar ist, wobei die Hand-Werkzeugmaschine (20) zur Relativverstellung der Werkzeugaufnahme (24) bezüglich des Führungselements (30) anhand der Lageranordnung (40) um zumindest eine die Führungsfläche (31) winkelig, insbesondere rechtwinkelig, durchsetzende Stellschwenkachse (S) schwenkbar ist, wobei die Hand-Werkzeugmaschine (20) eine Steuerungseinrichtung (60) zur Ansteuerung der Stellmotoranordnung (50) aufweist, und wobei die Steuerungseinrichtung (60) zur Ansteuerung der Stellmotoranordnung (50) derart ausgestaltet ist, dass die Stellmotoranordnung (50) die Werkzeugaufnahme (24) bezüglich des Führungselements (30) unter Beibehaltung einer Schwenkstellung bezüglich der Stellschwenkachse (S) mit einer zu der Führungsfläche (31) des Führungselements (30) parallelen Bewegungsrichtungskomponente (K1, K2) bezüglich des Führungselements (30) verstellt.

**15.** Verfahren zur Bearbeitung eines Werkstücks (W),

    - mit einer Hand-Werkzeugmaschine (20), die einen Antriebsmotor (22), eine durch den Antriebsmotor (22) antreibbare Werkzeugaufnahme (24) für ein Arbeitswerkzeug (25) zur Bearbeitung des Werkstücks (W) und ein Führungselement (30) mit einer Führungsfläche (31) zum Führen der Hand-Werkzeugmaschine (20) an dem Werkstück (W) aufweist,
    - mit einer Markierungserfassungseinrichtung (70) zur Erfassung von Koordinatendaten (KD1, KD2) mindestens einer Werkstückmarkierung (M1, M2) des Werkstücks (W), wobei die Hand-Werkzeugmaschine (20) Führungsmittel (65) zum Führen des Arbeitswerkzeugs (25) entlang des Werkstücks (W) in Abhängigkeit von den Koordinatendaten (KD1, KD2) der mindestens einen Werkstückmarkierung (M1, M2) aufweist, wobei das Verfahren umfasst,

      - Positionieren einer optischen und/oder mechanischen Referenz (71) der Markierungserfassungseinrichtung (70) auf und/oder unmittelbar neben der mindestens einen Werkstückmarkierung (M1, M2),
      - Ermittlung der Koordinatendaten (KD1, KD2) der mindestens einen Werkstückmarkierung (M1, M2) in Bezug auf ein zumindest zweidimensionales Koordinatensystem (KR2, KR3), welches von der Werkstückmarkierung (M1, M2) unabhängig ist, durch die Markierungserfassungseinrichtung (70),
      - und Führen des Arbeitswerkzeugs (25) mit Bezug auf das zumindest zweidimensionale Koordinatensystem (KR2, KR3) in einem Arbeitsbereich (AB), der durch Arbeitsbereichsdaten (AD) geometrisch definiert ist, die anhand der Koordinatendaten (KD1, KD2) der mindestens einen Werkstückmarkierung (M1, M2) ermittelt sind, durch die die Führungsmittel (65) der Hand-Werkzeugmaschine (20),

    und **gekennzeichnet ist durch**:

      Bereitstellung des zumindest zweidimensionalen Koordinatensystems (KR2, KR3) durch einen mindestens einen in einem Arbeitsraum (R), in dem das Werkstück (W) angeordnet ist, platzierbaren Koordinatengeber (80, 81; 180) und Ermittlung der Position des mindestens einen Koordinatengebers (80, 81; 180) und/oder Ermittlung von **durch** den mindestens einen Koordinatengeber (80, 81) gesendeten Referenzinformationen (RX, RY) **durch** die Führungsmittel (65) und/oder die Markierungserfassungseinrichtung (70).

## Claims

1. System for machining a workpiece (W)

   - comprising a hand-held power tool (20) having a drive motor (22), a tool holder (24), which can be driven by the drive motor (22), for a working tool (25) for machining the workpiece (W), and a guide element (30) with a guide surface (31) for guiding the hand-held power tool (20) on the workpiece (W),
   - having a marker detection device (70) for detecting coordinate data (KD1, KD2) of at least one workpiece marker (M1, M2) of the workpiece (W), wherein the hand-held power tool (20) has guide means (65) for guiding the working tool (25) along the workpiece (W) according to the coordinate data (KD1, KD2) of the at least one workpiece marker (M1, M2),

   wherein that the marker detection device (70) has an optical and/or mechanical reference (71) which can be positioned on and/or directly next to the at least one workpiece marker (M1, M2), in that the marker detection device (70) is designed for determining the coordinate data (KD1, KD2) of the at least one workpiece marker (M1, M2) relative to an at least two-dimensional coordinates system (KR2, KR3) which is independent from the workpiece marker (M1, M2), and wherein the guide means (65) of the hand-held power tool (20) are designed to guide the working tool (25) relative to the at least two-dimensional coordinates system (KR2, KR3) in a working area (AB) which is geometrically defined by working area data (AD) determined based on the coordinate data (KD1, KD2) of the at least one workpiece marker (M1, M2) **characterised in that**, in order to provide the at least two-dimensional coordinates system (KR2, KR3), it has at least one coordinates sensor (80, 81; 180) which can be placed in a working space (R) in which the workpiece (W) is arranged, and the guide means (65) and/or the marker detection device (70) are designed to determine the position of the at least one coordinates sensor (80, 81; 180) and/or to determine reference information (RX, RY) transmitted by the at least one coordinates sensor (80, 81).

2. System according to claim 1, **characterised in that** the at least one coordinates sensor (80, 81; 180) has fastening means (83), in particular adhesive fastening means (83A) and/or hook fastening means (183) and/or suction fastening means (86), for fastening to the workpiece (W) and/or a base and/or at least one utility surface (82) for placement on a base and/or the workpiece (W).

3. System according to any one of the preceding claims, **characterised in that** the at least one coordinates sensor (80, 81) is designed to transmit reference information (RX, RY) in mutually angular directions and/or in mutually parallel planes, wherein the marker detection device (70) and/or the guide means (65) are configured to detect this reference information (RX, RY), and/or **in that** the guide means (65) of the hand-held power tool (20) and/or the marker detection device (70) comprise an orientation means (67, 78) for orientation relative to the at least two-dimensional coordinates system (KR2, KR3) in a working space (R) in which the workpiece (W) is arranged, wherein the orientation means (67, 78) are designed for detecting geometric contours of the working space (R) and/or for receiving reference information (RX, RY) characterising the position of the hand-held power tool (20) and/or the marker detection device (70) and/or the workpiece (W) in the working space (R).

4. System according to any one of the preceding claims, **characterised in that** the marker detection device (70) is designed to detect the coordinate data (KD1, KD2) of the at least one workpiece marker (M1, M2) after the reference (71) has been positioned relative to the workpiece marker (M1, M2) according to at least one triggering condition, and/or **in that** the marker detection device (70) is designed for tactile and/or optical selection of the at least one workpiece marker (M1, M2), and/or **in that** the triggering condition comprises an operator action of an operator which can be detected by a sensor and/or electrical switch of the marker detection device (70) and/or a time condition, in particular a dwell time of the reference (71) relative to the at least one workpiece marker (M1, M2) for a predetermined time, and/or a distance detection of a distance between the reference (71) and the at least one workpiece marker (M1, M2), wherein an undershooting of a predetermined limit distance between the reference (71) and the workpiece marker (M1, M2) is detected during the distance detection.

5. System according to any one of the preceding claims or the preamble of claim 1, **characterised in that** the marker detection device (70) is a component which is separate or which can be separated from the hand-held power tool (20) or forms a component of the hand-held power tool (20), wherein the reference (71) in particular is arranged on the guide element (30).

6. System according to any one of the preceding claims, **characterised in that** the hand-held power tool (20) has a wired and/or wireless interface (64) for the marker detection device (70), via which the marker detection device (70) can transmit the coordinate data (KD1, KD2) of the at least one workpiece marker (M1, M2) to the hand-held power tool (20) and/or the hand-held power tool (20) has a holding fixture (38) for holding the marker detection device (70).

7. System according to any one of the preceding claims, **characterised in that** the marker detection device (70) does not have a drive motor (22) for driving a working tool (25) and/or is not or cannot be driven by a motor at least when detecting the workpiece marker (M1, M2), and/or **in that** the marker detection device (70) comprises a pen or is pen-shaped and/or has an optical light source (179) for providing the optical reference.

8. System according to any one of the preceding claims, **characterised in that** the guide means (65) comprise an output device (56) for the optical and/or acoustic output of default information relating to or defining the working area (AB), in particular a target working line (AL), for the operator, and/or **in that** the guide means (65) comprise a servo motor arrangement (50) for adjusting a relative position of the tool holder (24) relative to the guide element (30), and/or **in that** the guide means (65) and/or the marker detection device (70) is configured to determine the working area data (AD) of the working area, in particular an at least sectionally straight working line, on the basis of coordinate data (KD1, KD2) of at least two workpiece markers (M1, M2), which are at a distance from one another, relative to the at least two-dimensional coordinates system (KR2, KR3), and/or **in that** the guide means (65) and/or the marker detection device (70) have a receiving interface (69) for receiving default data (VO) defining the working area (AB), in particular a working line, in particular from a CAD device, and are designed to determine the working area data (AD) of the working area (AB) according to the default data (VO).

9. System according to any one of the preceding claims, **characterised in that** the working area (AB) comprises or is formed by a working line along which the working tool (25) is to be guided relative to the workpiece (W) and/or at least one machining surface of the workpiece (W) provided for machining the workpiece (W).

10. System according to any one of the preceding claims, **characterised in that**, for the detection of a respective position of the marker detection device (70) and/or the hand-held power tool (20), it comprises a coordinate detection device (95) which can be placed in the working space (R) in which the workpiece (W) is arranged and which forms a structural unit separate from the hand-held power tool (20) or the reference (71) of the marker detection device (70), and/or **in that** it comprises a tracking means (96) for tracking a movement of the workpiece (W) after the detection of at least one workpiece marker (M1, M2) by the marker detection device (70) up to a machining position (BP) provided for machining the workpiece (W) by the hand power tool (20), wherein the tracking means (96) is designed to provide tracking data (VD) characterising this movement and/or the machining position (BP), so that the guide means (65) of the hand-held power tool (20) guide the working tool (25) on the basis of the working area data (AD) determined on the basis of the coordinate data (KD1, KD2) of the at least one workpiece marker (M1, M2) and the tracking data (VD), wherein it is advantageously provided that the tracking means (96) comprise at least one workpiece position detection device (97A, 97B) and/or workpiece position reference marker (98) attached to the workpiece (W) after detection of the at least one workpiece marker (M1, M2) and at least until reaching the machining position (BP).

11. System according to any one of the preceding claims, **characterised in that** a plurality of device reference markers (68) and/or sensors for determining the orientation in the at least two-dimensional coordinates system (KR2, KR3) is arranged on the marker detection device (70) and/or the hand-held power tool (20) and/or a workpiece position detection device (97) which can be attached to the workpiece (W).

12. System according to any one of the preceding claims, **characterised in that** on the marker detection device (70) and/or the hand-held power tool (20) and/or a workpiece position detection device (97) which can be attached to the workpiece (W), at least two device reference markers (68) and/or at least two sensors for determining the orientation in the at least two-dimensional coordinates system (KR2, KR3) are arranged at extremities and/or end regions remote from one another and/or at a distance from one another which corresponds to at least half, preferably at least two thirds, of a respective extension length of the hand power tool (20) or the marker detection device (70).

13. System according to any one of the preceding claims, **characterised in that** at least one component of the system, which is formed by the hand-held power tool (20), in particular its control device (60), and/or by the marker detection device (70) and/or by a workpiece position detection device (97A, 97B) positioned or positionable on the workpiece (W), is configured for a translation and/or conversion of coordinate data of at least one point from a local, in particular two-dimensional or three-dimensional, coordinates system (KW3, KM3, KT3) related to the respective component into the at least two-dimensional, in particular stationary, coordinates system (KR2, KR3) and/or vice versa relative to the working space (R).

14. System according to any one of the preceding claims, **characterised in that** the tool holder (24) of the hand-held power tool is mounted movably relative to the guide element (30) by means of a bearing arrangement (40) and can be driven by a servo motor arrangement (50), wherein the hand-held power tool (20) can be swivelled via the bearing arrangement (40) about at least one adjusting swivel axis (S) passing through the guide surface (31) at an angle, in particular at a right angle, for the relative adjustment of the tool holder (24) relative to the guide element (30), wherein the hand-held power tool (20) has a control device (60) for controlling the servo motor arrangement (50), and wherein the control device (60) for controlling the servo motor arrangement (50) is designed in such a way that the servo motor arrangement (50) adjusts tool holder (24) relative to guide element (30) while maintaining a swivel position relative to adjusting swivel axis (S) with movement direction component (K1, K2) parallel to the guide surface (31) of the guide element (30) relative to the guide element (30).

15. Method for machining a workpiece (W),

- comprising a hand-held power tool (20) having a drive motor (22), a tool holder (24), which can be driven by the drive motor (22), for a working tool (25) for machining the workpiece (W), and a guide element (30) with a guide surface (31) for guiding the hand-held power tool (20) on the workpiece (W),
- having a marker detection device (70) for detecting coordinate data (KD1, KD2) of at least one workpiece marker (M1, M2) of the workpiece (W), wherein the hand-held power tool (20) has guide means (65) for guiding the working tool (25) along the workpiece (W) according to the coordinate data (KD1, KD2) of the at least one workpiece marker (M1, M2),
the method comprising:

- Positioning of an optical and/or mechanical reference (71) of the marker detection device (70) on and/or directly next to the at least one workpiece marker (M1, M2),
- Determining by the marker detection device (70) of the coordinate data (KD1, KD2) of the at least one workpiece marker (M1, M2) relative to an at least two-dimensional coordinates system (KR2, KR3), which is independent from the workpiece marker (M1, M2),
- and Guiding the working tool (25) according to the at least two-dimensional coordinates system (KR2 KR3) in a working area (AB) which is geometrically defined by working area data (AD) determined based on the coordinate data (KD1, KD2) of the at least one workpiece marker (M1, M2) through the guide means (65) of the hand-held power tool (20),

and being **characterised by**:

Providing the at least two-dimensional coordinates system (KR2, KR3) by means of at least one coordinates sensor (80, 81; 180) which can be placed in a working space (R) in which the workpiece (W) is arranged, and
Determining of the position of the at least one coordinates sensor (80, 81; 180) and/or Determining reference information (RX, RY) transmitted by the at least one coordinates sensor (80, 81) by the guide means (65) and/or the marker detection device (70).

## Revendications

1. Système destiné à l'usinage d'une pièce (W),

- avec une machine-outil portative (20), qui présente un moteur d'entraînement (22), un logement d'outil (24) pouvant être entraîné par le moteur d'entraînement (22) pour un outil de travail (25) destiné à usiner la pièce (W) et un élément de guidage (30) avec une surface de guidage (31) pour guider la machine-outil portative (20) sur la pièce (W),
- avec un dispositif de détection de repères (70) destiné à détecter des données de coordonnées (KD1, KD2) d'au moins un repère de pièce (M1, M2) de la pièce (W), dans lequel la machine-outil portative (20) présente des moyens de guidage (65) destinés à guider l'outil de travail (25) le long de la pièce (W) en fonction des données de coordonnées (KD1, KD2) de l'au moins un repère de pièce (M1, M2) ;
dans lequel le dispositif de détection de repères (70) présente une référence (71) optique et/ou mécanique, qui peut être positionnée sur et/ou directement à côté de l'au moins un repère de pièce (M1, M2),

dans lequel le dispositif de détection de repères (70) est configuré pour déterminer les données de coordonnées (KD1, KD2) de l'au moins un repère de pièce (M1, M2) en ce qui concerne un système de coordonnées (KR2, KR3) au moins bidimensionnel, lequel est indépendant du repère de pièce (M1, M2),

et dans lequel les moyens de guidage (65) de la machine-outil manuelle (20) sont configurés pour un guidage de l'outil de travail (25) par rapport à l'au moins un système de coordonnées (KR2, KR3) bidimensionnel dans une zone de travail (AB), qui est définie géométriquement par des données de zone de travail (AD), qui sont déterminées à l'aide des données de coordonnées (KD1, KD2) de l'au moins un repère de pièce (M1, M2),

**caractérisé en ce qu'**il présente pour fournir l'au moins un système de coordonnées bidimensionnel (KR2, KR3) au moins un transmetteur de coordonnées (80, 81 ; 180) pouvant être placé dans un espace de travail (R), dans lequel la pièce (W) est disposée et les moyens de guidage (65) et/ou le dispositif de détection de repères (70) sont configurés pour déterminer la position de l'au moins un transmetteur de coordonnées (80, 81 ; 180) et/ou pour déterminer des informations de référence (RX, RY) envoyées par l'au moins un transmetteur de coordonnées (80, 81).

2. Système selon la revendication 1, **caractérisé en ce que** l'au moins un transmetteur de coordonnées (80, 81 ; 180) présente des moyens de fixation (83), en particulier des moyens de fixation par adhérence (83A) et/ou des moyens de fixation par crochet (183) et/ou des moyens de fixation par aspiration (86), destinés à être fixés sur la pièce (W) et/ou un support et/ou au moins une surface de pose (82) à placer sur un support et/ou la pièce (W).

3. Système selon l'une quelconque des revendications précédentes, **caractérisé en ce que** l'au moins un transmetteur de coordonnées (80, 81) est configuré pour envoyer des informations de référence (RX, RY) dans des directions angulaires les unes par rapport aux autres et/ou dans des plans parallèles les uns aux autres, dans lequel le dispositif de détection de repères (70) et/ou les moyens de guidage (65) sont configurés pour une détection desdites informations de référence (RX, RY), et/ou que les moyens de guidage (65) de la machine-outil portative (20) et/ou le dispositif de détection de repères (70) présentent un moyen d'orientation (67, 78) destiné à être orienté par rapport à l'au moins un système de coordonnées bidimensionnel (KR2, KR3) dans un espace de travail (R), dans lequel la pièce (W) est disposée, dans lequel le moyen d'orientation (67, 78) est configuré pour détecter des contours géométriques de l'espace de travail (R) et/ou pour recevoir des informations de référence (RX, RY), lesquelles caractérisent la position de la machine-outil portative (20) et/ou du dispositif de détection de repères (70) et/ou de la pièce-outil (W) dans l'espace de travail (R).

4. Système selon l'une quelconque des revendications précédentes, **caractérisé en ce que** le dispositif de détection de repères (70) est configuré pour détecter les données de coordonnées (KD1, KD2) de l'au moins un repère de pièce (M1, M2) après le positionnement une fois effectué de la référence (71) par rapport au repère de pièce (M1, M2) en fonction d'au moins une condition de déclenchement et/ou que le dispositif de détection de repères (70) est configuré pour sélectionner de manière tactile et/ou optique l'au moins un repère de pièce (M1, M2), et/ou que la condition de déclenchement comprend une manipulation d'utilisation, pouvant être détectée par un capteur et/ou un commutateur électrique du dispositif de détection de repères (70), d'un utilisateur et/ou une condition temporelle, en particulier un séjour de la référence (71) par rapport à l'au moins un repère de pièce (M1, M2) pour un temps prédéfini, et/ou une détection de distance d'une distance entre la référence (71) et l'au moins un repère de pièce (M1, M2), dans lequel est détecté, lors de la détection de distance, un non-dépassement d'une distance limite prédéfinie entre la référence (71) et le repère de pièce (M1, M2).

5. Système selon l'une quelconque des revendications précédentes ou selon le préambule de la revendication 1, **caractérisé en ce que** le dispositif de détection de repère (70) est un composant séparé ou pouvant être séparé de la machine-outil portative (20) ou fait partie intégrante de la machine-outil portative (20), dans lequel en particulier la référence (71) est disposée sur l'élément de guidage (30).

6. Système selon l'une quelconque des revendications précédentes, **caractérisé en ce que** la machine-outil portative (20) présente une interface (64) filaire et/ou sans fil pour le dispositif de détection de repères (70), par l'intermédiaire de laquelle le dispositif de détection de repères (70) peut transmettre les données de coordonnées (KD1, KD2) de l'au moins un repère de pièce (M1, M2) à la machine-outil portative (20), et/ou la machine-outil portative (20) présente un logement de maintien (38) pour maintenir le dispositif de détection de repères (70).

7. Système selon l'une quelconque des revendications précédentes, **caractérisé en ce que** le dispositif de détection de repères (70) ne présente aucun moteur d'entraînement (22) destiné à entraîner un outil de travail (25) et/ou n'est pas entraîné ou ne peut pas être entraîné par un moteur au moins lors de la détection du repère de pièce (M1, M2), et/ou que le dispositif de détection de repères (70) comprend une broche ou est en forme de broche et/ou présente un phototransmetteur optique (179) pour fournir la référence optique.

8. Système selon l'une quelconque des revendications précédentes, **caractérisé en ce que** les moyens de guidage (65) présentent un dispositif de sortie (56) pour délivrer de manière optique et/ou acoustique une information de spécification concernant ou définissant la zone de travail (AB), en particulier d'une ligne de travail de consigne (AL), pour l'utilisateur, et/ou que les moyens de guidage (65) présentent un ensemble de moteur de réglage (50) pour ajuster une position relative du logement d'outil (24) par rapport à l'élément de guidage (30), et/ou que les moyens de guidage (65) et/ou le dispositif de détection de repères (70) sont configurés pour déterminer les données de zone de travail (AD) de la zone de travail, en particulier d'une ligne de travail droite au moins par endroits, à l'aide de données de coordonnées (KD1, KD2), se rapportant à l'au moins un système de coordonnées bidimensionnel (KR2, KR3), d'au moins deux repères de pièce (M1, M2), qui ont une distance l'un par rapport à l'autre, et/ou que les moyens de guidage (65) et/ou le dispositif de détection de repères (70) présentent une interface de réception (69) pour recevoir des données de spécification (VO) définissant la zone de travail (AB), en particulier une ligne de travail, en particulier d'un dispositif CAD, et sont configurés pour déterminer les données de zone de travail (AD) de la zone de travail (AB) en fonction des données de spécification (VO).

9. Système selon l'une quelconque des revendications précédentes, **caractérisé en ce que** la zone de travail (AB) comprend une ligne de travail, le long de laquelle l'outil de travail (25) est à guider par rapport à la pièce (W), et/ou au moins une surface d'usinage, prévue pour un usinage de la pièce (W), de la pièce (W), ou en est formée.

10. Système selon l'une quelconque des revendications précédentes, **caractérisé en ce qu'**il présente, pour détecter une position respective du dispositif de détection de repères (70) et/ou de la machine-outil portative (20), un dispositif de détection de coordonnées (95) pouvant être placé dans l'espace de travail (R), dans lequel la pièce (W) est disposée, qui forme une unité module séparée de la machine-outil portative (20) ou de la référence (71) du dispositif de détection de repères (70), et/ou qu'il présente un moyen de suivi (96) destiné à suivre un déplacement de la pièce (W) après la détection de l'au moins un repère de pièce (M1, M2) par le dispositif de détection de repères (70) jusqu'à une position d'usinage (BP) prévue pour l'usinage de la pièce (W) par la machine-outil portative (20), dans lequel les moyens de suivi (96) sont configurés pour fournir des données de suivi (VD) caractérisant ledit déplacement et/ou la position d'usinage (BP) si bien que les moyens de guidage (65) de la machine-outil portative (20) guident l'outil de travail (25) à l'aide des données de zone de travail (AD), qui sont déterminées à l'aide des données de coordonnées (KD1, KD2) de l'au moins un repère de pièce (M1, M2) et des données de suivi (VD), dans lequel il est prévu de manière avantageuse que le moyen de suivi (96) comprend au moins un dispositif de détection de position de pièce (97A, 97B) et/ou un repère de référence de position de pièce (98) fixés sur la pièce (W) après la détection de l'au moins un repère de pièce (M1, M2) et au moins jusqu'à l'atteinte de la position d'usinage (BP).

11. Système selon l'une quelconque des revendications précédentes, **caractérisé en ce qu'**une multitude de repères de référence d'appareils (68) et/ou de capteurs destinés à déterminer l'orientation dans l'au moins un système de coordonnées bidimensionnel (KR2, KR3) est disposée sur le dispositif de détection de repères (70) et/ou la machine-outil portative (20) et/ou un dispositif de détection de position de pièce (97) pouvant être fixé sur la pièce (W).

12. Système selon l'une quelconque des revendications précédentes, **caractérisé en ce que** sont disposés, sur le dispositif de détection de repères (70) et/ou la machine-outil portative (20) et/ou un dispositif de détection de position de pièce (97) pouvant être fixé sur la pièce (W) au moins deux repères de référence d'appareils (68) et/ou au moins deux capteurs destinés à déterminer l'orientation dans l'au moins un système de coordonnées bidimensionnel (KR2, KR3) d'extrémités et/ou de zones d'extrémité éloignées les unes des autres et/ou à une distance les unes des autres, qui correspond au moins à la moitié, de préférence au moins à deux tiers, d'une longueur d'extension respective de la machine-outil portative (20) ou du dispositif de détection de repères (70).

13. Système selon l'une quelconque des revendications précédentes, **caractérisé en ce qu'**au moins un composant du système, qui est formé par la machine-outil portative (20), en particulier son dispositif de commande (60), et/ou par le dispositif de détection de repères (70) et/ou par un dispositif de détection de position de pièce (97A, 97B) positionné ou pouvant être positionné sur la pièce (W), est configuré pour une translation et/ou un recalcul de données de coordonnées d'au moins un point à partir d'un système de coordonnées (KW3, KM3, KT3) local, en particulier bidimensionnel ou tridimensionnel, se rapportant au composant respectif dans l'au moins un système de coordonnées (KR2, KR3) bidimensionnel, en particulier stationnaire par rapport à l'espace de travail (R), et/ou inversement.

14. Système selon l'une quelconque des revendications précédentes, **caractérisé en ce que** le logement d'outil (24) de la machine-outil portative est monté de manière mobile par rapport à l'élément de guidage (30) à l'aide d'un ensemble de palier (40) et peut être entraîné à l'aide d'un ensemble de moteur de réglage (50), dans lequel la machine-outil portative (20) peut être pivotée autour d'au moins un axe de pivotement de réglage (S) traversant selon un angle, en particulier à angle droit, la surface de guidage (31) pour l'ajustement relatif du logement d'outil (24) par rapport à l'élément de guidage (30) à l'aide de l'ensemble de palier (40), dans lequel la machine-outil portative (20) présente un dispositif de commande (60) destiné à piloter l'ensemble de moteur de réglage (50), et dans lequel le dispositif de commande (60) destiné à piloter l'ensemble de moteur de réglage (50) est configuré de telle manière que l'ensemble de moteur de réglage (50) ajuste le logement d'outil (24) par rapport à l'élément de guidage (30) tout en conservant une position de pivotement par rapport à l'axe de pivotement de réglage (S) avec une composante directionnelle de déplacement (K1, K2) parallèle à la surface de guidage (31) de l'élément de guidage (30) par rapport à l'élément de guidage (30).

15. Procédé destiné à usiner une pièce (W),

- avec une machine-outil portative (20), qui présente un moteur d'entraînement (22), un logement d'outil (24) pouvant être entraîné par le moteur d'entraînement (22) pour un outil de travail (25) destiné à usiner la pièce (W) et un élément de guidage (30) avec une surface de guidage (31) destinée à guider la machine-outil portative (20) sur la pièce (W),
- avec un dispositif de détection de repères (70) destiné à détecter des données de coordonnées (KD1, KD2) d'au moins un repère de pièce (M1, M2) de la pièce (W), dans lequel la machine-outil portative (20) présente des moyens de guidage (65) destinés à guider l'outil de travail (25) le long de la pièce (W) en fonction des données de coordonnées (KD1, KD2) de l'au moins un repère de pièce (M1, M2),
dans lequel le procédé comprend

- le positionnement d'une référence (71) optique et/ou mécanique du dispositif de détection de repères (70) sur et/ou directement à côté de l'au moins un repère de pièce (M1, M2),

- la détermination des données de coordonnées (KD1, KD2) de l'au moins un repère de pièce (M1, M2) par rapport à un système de coordonnées au moins bidimensionnel (KR2, KR3), lequel dépend du repère de pièce (M1, M2), par le dispositif de détection de repères (70),
- et le guidage de l'outil de travail (25) par rapport au système de coordonnées au moins bidimensionnel (KR2, KR3) dans une zone de travail (AB), qui est définie géométriquement par des données de zone de travail (AD), qui sont déterminées à l'aide des données de coordonnées (KD1, KD2) de l'au moins un repère de pièce (M1, M2), par les moyens de guidage (65) de la machine-outil portative (20),

et **caractérisé par** :

la fourniture du système de coordonnées au moins bidimensionnel (KR2, KR3) par un transmetteur de coordonnées (80, 81 ; 180) pouvant être placé au moins dans un espace de travail (R), dans lequel la pièce (W) est disposée,
et la détermination de la position de l'au moins un transmetteur de coordonnées (80, 81 ; 180) et/ou la détermination d'informations de référence (RX, RY) envoyées par l'au moins un transmetteur de coordonnées (80, 81) par les moyens de guidage (65) et/ou le dispositif de détection de repères (70).

Fig. 1

Fig. 2

Fig. 3

EP 3 704 553 B1

Fig. 4

Fig. 5

32

Fig. 6

Fig. 7

Fig. 8

Fig. 9

Fig. 10

Fig. 11

**Fig. 12**

**Fig. 13**

**Fig. 16**

Fig. 14

Fig. 15

**Fig. 17**

**Fig. 18**

**EP 3 704 553 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016183390 A1
- US 20150094836 A1